(19) Europäisches Patentamt
European Patent Office
Office européen des brevets

(11) EP 1 990 366 A1

(12) **EUROPEAN PATENT APPLICATION**
published in accordance with Art. 158(3) EPC

(43) Date of publication:
**12.11.2008 Bulletin 2008/46**

(21) Application number: **07708031.5**

(22) Date of filing: **05.02.2007**

(51) Int Cl.:
***C08L 83/04*** *(2006.01)* ***B05D 7/24*** *(2006.01)*
***B32B 27/00*** *(2006.01)* ***B32B 27/38*** *(2006.01)*
***C08K 5/57*** *(2006.01)* ***C09D 5/16*** *(2006.01)*
***C09D 183/04*** *(2006.01)*

(86) International application number:
**PCT/JP2007/051913**

(87) International publication number:
**WO 2007/094186 (23.08.2007 Gazette 2007/34)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.02.2006 JP 2006041641**
**20.02.2006 JP 2006042343**

(71) Applicant: **CHUGOKU MARINE PAINTS, LTD.**
**Ohtake-shi,**
**Hiroshima 739-0652 (JP)**

(72) Inventors:
- **HATA, Masaya**
**Ohtake-shi**
**Hiroshima 739-0652 (JP)**
- **TASHIRO, Shinichi**
**Ohtake-shi**
**Hiroshima 739-0652 (JP)**

(74) Representative: **HOFFMANN EITLE**
**Patent- und Rechtsanwälte**
**Arabellastrasse 4**
**81925 München (DE)**

# (54) CURABLE ORGANOPOLYSILOXANE COMPOSITION AND ANTIFOULING COMPOSITE COATING FILM

(57) [Problems to be solved]

To provide a curable organopolysiloxane composition, wherein the composition can be laminated directly on the surface of an epoxy resin anticorrosive coating film and can form an antifouling coating film which has improved antifouling performance compared to the conventional art.

[Means for solving the problems]

A two-liquid type or three-liquid type curable organopolysiloxane composition, wherein the composition contains at least an organopolysiloxane having at least two condensation reactive groups in the molecule (a1), silica (a2), an organosilane and/or a partial hydrolyzate thereof (b1), wherein the organosilane has functional group(s) capable of undergoing condensation reaction with the condensation reactive groups of the above organopolysiloxane (a1), and at least one kind of tin compound selected from the group represented by a predefined general formula.



Printed by Jouve, 75001 PARIS (FR)

## Description

### TECHNICAL FIELD

The present invention relates to a curable organopolysiloxane composition which is improved in adhesion to an epoxy resin anticorrosive coating film and in addition is able to form an antifouling coating film having excellent antifouling properties. The present invention also relates to an antifouling paint composition containing such curable organopolysiloxane composition, an antifouling coating film formed by curing this antifouling paint composition, and an antifouling composite coating film comprising this antifouling coating film and an epoxy resin anticorrosive coating film.

### BACKGROUND ART

A coating film formed from a curable organopolysiloxane paint composition is used as an antifouling coating film for preventing the adhesion of aquatic organisms on a surface of an underwater structure and is useful as a replacement of a traditional antifouling coating film containing harmful substances like organometallic compounds. This cured organopolysiloxane antifouling coating film is laminated as an upper layer on an epoxy resin anticorrosive coating film which is formed on a surface of a base material such as steel from an anticorrosive standpoint, and may be preferably used as a cured organopolysiloxane antifouling composite coating film.
A cured organopolysiloxane antifouling composite coating film was conventionally composed of a layer of a cured organopolysiloxane antifouling coating film (Finish Coat), a layer of an epoxy anticorrosive coating film (Under Coat) and one or two layers of organopolysiloxane intermediate coating film (Tie Coat) sandwiched between the Finish Coat and the Under Coat, thus forming a 3 or 4 layered coating film structure for the whole antifouling composite coating film, which in turn served to maintain adhesion between the coating films. However, such an antifouling composite coating film having the multilayered coating film structure was not able to obtain long-term antifouling properties and also had a problem of cost increase due to prolonged painting work period.
As conventional curable organopolysiloxane paint compositions, those described in the following documents have been known.
Japanese Patent Application Laid-open No.2002-500239 (Patent Document 1) discloses an antifouling paint composition of 3 pack combination comprising a base containing, for example, α,ω-hydroxy-functional siloxane, silica, silicone oil and the like, a curing agent containing tetraethyl orthosilicate, silicone oil and the like, and a catalyst solution containing dibutyltin dilaurate and the like.
Japanese Patent Application Laid-open No.05-505845 (Patent Document 2) discloses, for example, a room temperature-curable polydiorganosiloxane containing α,ω-dihydroxy-polydiorganosiloxane, an alkoxysilane curing agent, a curing catalyst comprising a metallic or organometallic salt of carboxylic acid (for example: stannous octanoate, dibutyltin dilaurate, dibutyltin acetate) and the like.
Japanese Patent Application Laid-open No.05-507955 (Patent Document 3) discloses, for example, an organopolysiloxane composition containing α,ω-dihydroxypolydiorganosiloxane, a ketiminoxysilane compound as a crosslinking agent, a metallic or organometallic salt of carboxylic acid as a catalyst (for example: stannous octanoate, dibutyltin dilaurate, dibutyltin diacetate), heat-treated silica, non-reactive silicone oil and the like.
Japanese Patent Application Laid-open No.07-506599 (Patent Document 4) discloses, for example, a composition for forming an antifouling coating film, wherein the composition contains a polymer in which at least a main part of repeating units is a unit other than siloxane unit, a curable polydiorganosiloxane, a curing agent that can be used as a single pack or a two-liquid type such as tetraethyl orthosilicate, a condensation and curing catalyst such as carboxylic acid salt of a metal such as tin (for example: dibutyltin dilaurate, dibutyltin dioctoate, tin (II) octanoate, dibutyltin acetoacetonate) and the like, silicone oil and the like. Further, the antifouling paint compositions containing such compositions are described to be applicable with preferable adhesion on the publicly-known anticorrosive coating formed from epoxy paint and the like.
However, when the curable organopolysiloxane paint compositions described in those patent documents, that is, the conventional paint compositions containing carboxylic acid salt of tin are used, at least one intermediate coating film layer (Tie Coat) of organopolysiloxane was necessary in order to form a composite coating film, since a cured organopolysiloxane antifouling coating film does not adhere to an epoxy coating film of the underlying base material.

[Patent Document 1]: Japanese Patent Application Laid-open No.2002-500239
[Patent Document 2]: Japanese Patent Application Laid-open No.05-505845
[Patent Document 3]: Japanese Patent Application Laid-open No.05-507955
[Patent Document 4]: Japanese Patent Application Laid-open No.07-506599

DISCLOSURE OF THE INVENTION

[Problems to be solved by the Invention]

An object of the present invention is, for the purpose of solving problems accompanying the related art, to provide a curable organopolysiloxane composition that affords antifouling coating film which has highly excellent interlayer adhesive properties when laminated directly on the surface of an epoxy resin anticorrosive coating film as well as excellent antifouling properties, and to provide an antifouling composite coating film comprising an antifouling coating film formed from such curable organopolysiloxane composition and an epoxy resin anticorrosive coating film.

[Means for solving the problems]

The inventors, as a result of zealous studies for solving the above-mentioned problems, found that a cured organopolysiloxane antifouling coating film which has increased adhesiveness to an epoxy anticorrosive coating film and in addition good antifouling properties and good coating film strength was formed by combining a specific tin catalyst with a curable organopolysiloxane antifouling paint composition, preferably combining in a specified ratio, and accomplished the present invention.

The first curable organopolysiloxane composition of the present invention is provided as a three-liquid type curable organopolysiloxane composition comprising, (A) a main agent component containing an organopolysiloxane (a1) which has at least two condensation reactive groups in the molecule and silica (a2), (B) a curing agent component containing an organosilane and/or a partial hydrolyzate thereof (b1), wherein the organosilane has functional group(s) capable of undergoing condensation reaction with the condensation reactive group of organopolysiloxane (a1) which has at least two condensation reactive groups in the molecule, and (C) a cure-accelerator component containing at least one kind of tin compound (ac) selected from the group consisting of tin compounds represented by the following general formulas (I) - (V).

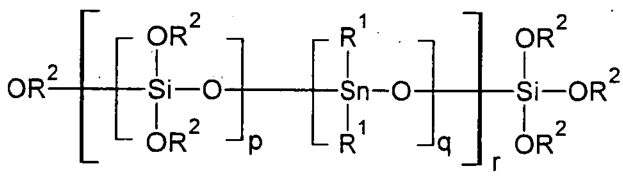

······(I)

(In the formula (I), $R^1$ represents a $C_1$-$C_{10}$ hydrocarbon group, and $R^2$ represents a $C_1$-$C_4$ hydrocarbon group. p represents an integer of 1 to 10, q represents an integer of 1 to 4, and r represents an integer of 1 to 5.)

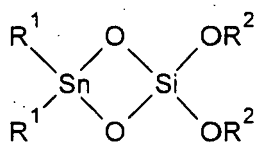

······(II)

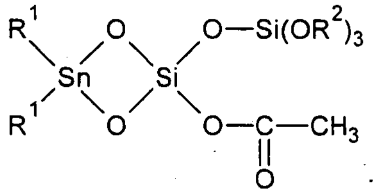

······(III)

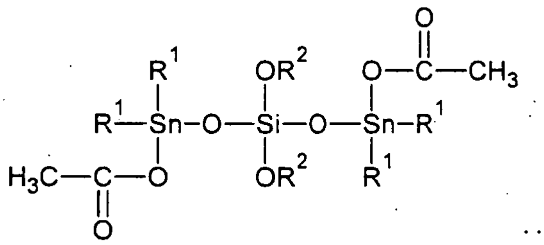

...... (IV)

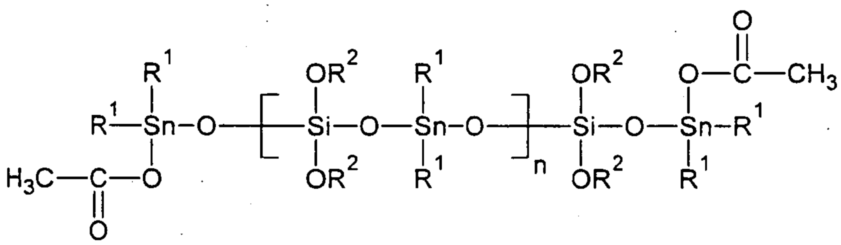

...... (V)

(In the formulas (II) - (V), $R^1$ represents a $C_1$-$C_{10}$ hydrocarbon group, and $R^2$ represents a $C_1$-$C_4$ hydrocarbon group. In the formula (V), n represents an integer of 1 or larger.)

Further, the second curable organopolysiloxane composition of the present invention is provided also as a two-liquid type curable organopolysiloxane composition comprising (A) a main agent component containing the above-mentioned organopolysiloxane (a1) and silica (a2), (B) a curing agent component containing the above mentioned organosilane and/or a partial hydrolyzate thereof (b1), and at least one kind of tin compound (ac) selected from the group consisting of tin compounds represented by the above general formulas (I) - (V), wherein the tin compound is combined with the main agent component (A) or the curing agent component (B).

As at least one kind of tin compounds selected from the group consisting of tin compounds represented by the above general formulas (I)-(V), a siloxane bond-containing tin compound is preferable.

The third curable organopolysiloxane composition of the present invention is provided as a three-liquid type curable organopolysiloxane composition to be applied directly to an epoxy resin anticorrosive coating film, comprising (A) a main agent component containing the above-mentioned organopolysiloxane (a1) and silica (a2), (B) a curing agent component containing the above-mentioned organosilane and/or a partial hydrolyzate thereof (b1), and (C) a cure-accelerator component containing at least one kind of tin compound (ac) selected from the group consisting of tin compounds represented by the following general formulas (VI) - (VIII).

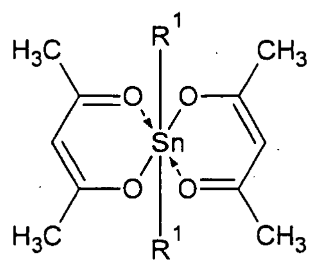

...... (VI)

(In the formula (VI), $R^1$ represents a $C_1$-$C_{10}$ hydrocarbon group.)

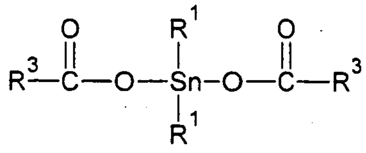

······(VII)

(In the formula (VII), $R^1$ represents a $C_1$-$C_{10}$ hydrocarbon group, and $R^3$ represents a $C_1$-$C_9$ hydrocarbon group.)

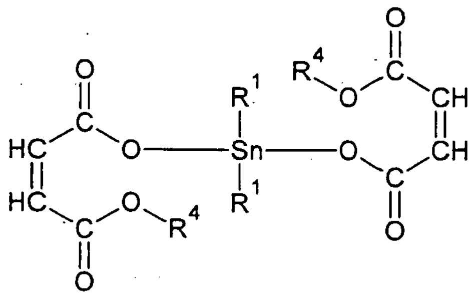

······(VIII)

(In the formula (VIII), $R^1$ represents a $C_1$-$C_{10}$ hydrocarbon group, and $R^4$ represents a $C_1$-$C_3$ hydrocarbon group.)

The fourth curable organopolysiloxane composition of the present invention is provided also as a two-liquid type curable organopolysiloxane composition to be applied directly to an epoxy resin anticorrosive coating film, comprising (A) a main agent component containing the above-mentioned organopolysiloxane (a1) and silica (a2), (B) a curing agent component containing the above-mentioned organosilane and/or a partial hydrolyzate thereof (b1), and at least one kind of tin compound (ac) selected from the group consisting of tin compounds represented by the above general formulas (VI) - (VIII), wherein the tin compound is combined with the main agent component (A) or the curing agent component (B).

Further, as at least one kind of tin compound selected from the group consisting of tin compounds represented by the above general formulas (VI)-(VIII), at least one kind of tin compound selected from the group consisting of dibutyltin acetoacetonate, dibutyltin diacetate, dibutyltin dipentoate, dibutyltin dioctoate, dibutyltin dineodecanoate, dioctyltin dineodecanoate, dibutyltin bis(ethyl malate) and dioctyltin bis(ethyl malate) is preferable.

As to the first to the fourth curable organopolysiloxane compositions mentioned above, the ratio of tin contained in tin compound (ac) with respect to the total amount of organopolysiloxane (a1) having at least 2 condensation reactive groups in the molecule and silica (a2) is preferably 0.001-2.0 % by weight, more preferably 0.01-1.0 % by weight, and the ratio with respect to the total amount of components (a1), (a2) and (b1) is preferably 0.001-1.0 % by weight, more preferably 0.01-0.5 % by weight.

The above-mentioned organopolysiloxane (a1) in the main agent component (A) represents an organopolysiloxane containing preferably at least two functional groups in the molecule, more preferably at the both terminals, independently selected from the group consisting of hydroxyl group, oxime group, amino group, acetyloxy group and alkoxy group.

The above-mentioned organosilane and/or a partial hydrolyzate thereof (b1) in the curing agent component (B) is preferably an organosilane and/or a partial hydrolyzate thereof, wherein the organosilane contains hydroxyl group, oxime group, acetyloxy group or alkoxy group, more preferably an alkylsilicate or a partial hydrolyzate thereof.

The main agent component (A) preferably contains a heat-treated substance (a22) formed by prior heat treatment of an organopolysiloxane (a1) having at least two condensation reactive groups in the molecule and silica (a2), or such heat-treated substance (a22) and an organopolysiloxane (a12) having at least two condensation reactive groups in the molecule.

The main agent component (A) may contain additionally a color pigment (a3) such as titanium white, iron oxide black, carbon black, iron oxide red, and cobalt blue. The added amount of these color pigments to the total amount of organopolysiloxane (a1) having at least two condensation reactive groups in the molecule and silica (a2) is preferably 0.01-30 % by weight, more preferably 0.1-20 % by weight.

The main agent component (A) may additionally contain a solvent (a4).

The added amount of organosilane and/or a partial hydrolyzate thereof (b1) in the curing agent component (B) with respect to the total amount of organopolysiloxane (a1) having at least two condensation reactive groups in the molecule and silica (a2) is preferably 1-20 % by weight, more preferably 3-10 % by weight.

The main agent component (A) and/or the curing agent component (B) may contain additionally a liquid organopolysiloxane (d1). The number average molecular weight (Mn) of this liquid organopolysiloxane (d1) measured by GPC is preferably 400-10000.

The above liquid organopolysiloxane (d1) may be, for example, a non-reactive liquid organopolysiloxane (d11) represented by the following general formula (3a) and/or (3b), and also may be, for example, a reactive liquid organopolysiloxane (d12) represented by the following general formula (3c). The condensation reactive group of the reactive liquid organopolysiloxane (d12) is preferably at least one kind of condensation reactive group selected from the group consisting of hydroxyl group, oxime group, amino group, acetyloxy group and alkoxy group.

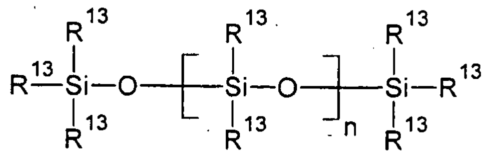

...... (3a)

(In the above general formula (3a), $R^{13}$s may be identical or different and represent an alkyl group, aryl group, aralkyl group, or fluoroalkyl group, each having 1-10 carbon atoms. n represents an integer of 0 to 500.)

$$R^{14}_xSi(R^{15}\text{-}Z)_yO_{(4-x-y)/2} \qquad (3b)$$

(In the above-mentioned composition formula (3b), $R^{14}$ represents hydrogen atom or an alkyl group, aryl group, or aralkyl group, each having 1-10 carbon atoms, $R^{15}$ represents a $C_2$-$C_{10}$ divalent aliphatic hydrocarbon group which may be interrupted by an ether group, ester group or -NH-, Z represents a monovalent polar group such as amino group, carboxyl group or epoxy group, or a polyethylene glycol group or polypropylene glycol group of which terminal may be blocked with an alkyl group or acyl group having 1-6 carbon atoms. Further, x and y satisfy the relationships:

$$0.01 \le x < 3.99,\ 0.02 \le y < 4,\ \text{and}\ 0.02 \le x+y < 4.)$$

$$\equiv SiR^4OSiR^5_bY_{(3-b)} \qquad (3c)$$

(In the above formula (3c), $R^4$ represents an unsubstituted or substituted divalent hydrocarbon group or divalent hydrocarbon group containing ether linkage, $R^5$ represents an unsubstituted or substituted monovalent hydrocarbon group, Y represents a condensation reactive group and b represents 0, 1, or 2.)

The ratio of the liquid organopolysiloxane (d1), when it is combined with the main agent component (A), with respect to the total amount of organopolysiloxane (a1) having at least two condensation reactive groups in the molecule and silica (a2) is preferably 0.01-15 % by weight, more preferably 1-10 % by weight. Further, when it is combined with the curing agent component (B), the ratio with respect to the organosilane and/or a partial hydrolyzate thereof (b1) is preferably 0.01-500 % by weight, more preferably 50-350 % by weight. As such liquid organopolysiloxane (d1), silicone oil is preferred.

A silane coupling agent may be additionally combined with the main agent component (A) and/or the curing agent component (B). The added amount of the silane coupling agent, when it is combined with the main agent component (A), with respect to the total amount of organopolysiloxane (a1) and silica (a2) is preferably 0.01-1 % by weight, while the added amount, when it is combined with the curing agent component (B), with respect to the amount of the organosilane and/or a partial hydrolyzate thereof is preferably 0.01-50 % by weight.

By curing the antifouling paint composition [ii] containing the above-mentioned curable organopolysiloxane compositions, the antifouling coating film [II] of the present invention can be formed.

This antifouling coating film [II] has good adhesiveness to an epoxy resin anticorrosive coating film, especially the epoxy resin anticorrosive coating film [I] which is formed from an anticorrosive paint composition [i] which contains an epoxy resin (e1), an amine-based curing agent (e2) for an epoxy resin, and optionally a body pigment (e3) and an anti-sagging agent (e4). This antifouling coating film [II] can be used as an antifouling composite coating film by laminating directly on the surface of this epoxy resin anticorrosive coating film [I].

As a preferred specific example of components contained in the above-mentioned epoxy resin anticorrosive paint composition [i], there may be cited bisphenol type epoxy resin as the epoxy resin (e1), polyamideamine as the amine-based curing agent (e2) for an epoxy resin, talc, barium sulfate, mica, titanium dioxide and carbon black as the

body pigment (e3), and polyamide wax as the anti-sagging agent (e4).

The antifouling coating film and the antifouling composite coating film of the present invention mentioned above can be painted to coat base materials of an underwater structure, ship or the like, and can exhibit excellent antifouling properties.

[Effects of the Invention]

According to the present invention, it is possible to laminate, without a conventional intermediate coating film layer, the cured organopolysiloxane antifouling coating film having excellent interlaminar adhesiveness to epoxy anticorrosive coating film layer directly on the surface of the epoxy anticorrosive coating film layer, realizing shortening of a work period of painting operation and cost reduction.

BEST MODE FOR CARRYING OUT THE INVENTION

Hereinafter, there will be specifically described the curable organopolysiloxane composition in the present invention, the curable organopolysiloxane antifouling paint composition [ii] (also may be simply called "antifouling paint composition [ii]") containing the above composition, the cured organopolysiloxane antifouling coating film (also may be simply called "antifouling coating film [II]") formed from the above antifouling paint composition [ii], the epoxy resin anticorrosive paint composition [i] (also may be simply called "anticorrosive paint composition [i]), the epoxy resin anticorrosive coating film [I] (also may be simply called "anticorrosive coating film [I]") and the cured organopolysiloxane antifouling composite coating film (also may be simply called "the antifouling composite coating film") comprising the above anticorrosive coating film [I] and the above antifouling coating film [II].

<u>A curable organopolysiloxane composition</u>

The curable organopolysiloxane composition of the present invention contains at least

(a1) an organopolysiloxane containing at least two condensation reactive groups in the molecule,
(a2) silica,
(b1) an organosilane and/or a partial hydrolyzate thereof,

wherein the organosilane has functional group(s) capable of undergoing condensation reaction with condensation reactive groups of the above organopolysiloxane (a1), and (ac) at least one kind of tin compound selected from the group consisting of tin compounds represented by the above general formulas (I)-(V), or at least one kind of tin compound selected from the group consisting of tin compounds represented by the above general formulas (VI)-(VIII).

In the present invention, the term "(a1) an organopolysiloxane having at least two condensation reactive groups in the molecule" may be simply called "organopolysiloxane (a1)" or "component (a1)", and the term "(b1) an organosilane and/or a partial hydrolyzate thereof having functional group (s) capable of undergoing condensation reaction with condensation reactive groups of the above organopolysiloxane (a1)" may be simply called " organosilane (b1)" or "component (b1)".

Further, among the tin compounds (ac), the above-mentioned term "at least one kind of tin compound selected from the group consisting of tin compounds represented by the above general formulas (I)-(V)" may be called "tin compound (ac1)", the term "at least one kind of tin compound selected from the group consisting of tin compounds represented by the above general formulas (V)-(VIII)" may be called "tin compound (ac2)".

The curable organopolysiloxane composition of the present invention is usually provided as a three-liquid type or two-liquid type composition described below. These three liquids or two liquids are each stored separately in vessels like cans, and mixed and stirred at the time of painting.

As to the above curable organopolysiloxane composition with an aspect of the three-liquid type, the following main agent component (A), the curing agent component (B), and the cure-accelerator component (C) are each packed separately and mixed together at the time of use.

In this case, the main agent component (A) contains an organopolysiloxane (a1) having at least two condensation reactive groups in the molecule and silica (a2). The curing agent component (B) contains an organosilane and/or a partial hydrolyzate thereof (b1). The cure-accelerator component (C) contains tin compound(s) (ac).

On the other hand, as to the above curable organopolysiloxane composition with an aspect of the two-liquid type, the following main agent component (A) and the curing agent component (B) are each packed separately and mixed together at the time of use.

In this case, the main agent component (A) contains an organopolysiloxane (a1) having at least two condensation reactive groups in the molecule and silica (a2). The curing agent component (B) contains an organosilane and/or a

partial hydrolyzate thereof (b1). Further, tin compound(s) (ac) are used as being combined with the main agent component (A) or the curing agent component (B).

Furthermore, in both cases of the above two-liquid type and three-liquid type, a color pigment (a3) or a solvent (a4) may be combined with the main agent component (A), and also a liquid organopolysiloxane (d1) or a silane coupling agent may be combined with the main agent component (A) and/or the curing agent component (B).

Hereinafter, each component of these organopolysiloxane (a1), silica (a2), organosilane (b1), tin compound (ac), color pigment (a3), solvent (a4), liquid organopolysiloxane (d1) and silane coupling agent are described one by one.

<u>Organopolysiloxane (a1)</u>

The organopolysiloxane (a1) used in the present invention contains at least two condensation reactive groups in the molecule and is a polymer having a structure represented by the following general formula (1).

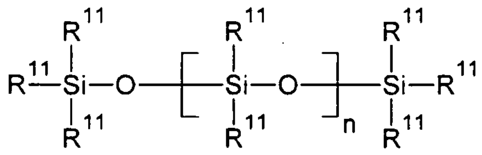

······(1)

In the above general formula (1), $R^{11}$s may be identical or different and each represent a condensation reactive group or a $C_1$-$C_{12}$ monovalent hydrocarbon group. However, at least two of $R^{11}$ must be condensation reactive groups. n represents an integer of 250 to 2500, preferably 350 to 1500.

Further, the organopolysiloxane (a1) represented by the above general formula (1) usually has the number average molecular weight of 20,000-170,000, preferably 25,000-100,000, and usually has the viscosity at 25 °C of 500-1,000,000 mPa•s, preferably 1,000-100,000 mPa•s.

The above-mentioned "condensation reactive groups" include hydroxyl group, or hydrolyzable group such as alkoxy group, acetyloxy group, alkenyloxy group, iminoxy group, amino group, amido group, aminoxy group, oxime group and the like, and especially hydroxyl group, oxime group, amino group, acetyloxy group and alkoxy group are preferable from the standpoint of the reactivity.

Among the above-mentioned amino groups, those having a total number of 1-10 carbon atoms are preferable, and included are, for example, N-methylamino group, N-ethylamino group, N-propylamino group, N-butylamino group, N,N-dimethylamino group, N,N-diethylamino group, cyclohexylamino group and the like.

Among the above-mentioned acetyloxy groups, $C_1$-$C_{10}$ aliphatic ones or $C_6$-$C_{12}$ aromatic ones are preferable, and included are, for example, acetoxy group, propyloxy group, butyloxy group, benzoyloxy group and the like.

Among the above-mentioned alkoxy groups, those having a total number of 1-10 carbon atoms are preferable, optionally interrupted by an oxygen atom (ether linkage) between carbon atoms at least at one site, and included are, for example, methoxy group, ethoxy group, propoxy group, butoxy group, methoxyethoxy group, ethoxyethoxy group and the like.

The organopolysiloxane (a1) in the present invention, from the standpoint of the reactivity, preferably contains, at both' terminals, functional groups each selected independently from the group consisting of hydroxyl group, oxime group, amino group, acetyloxy group and alkoxy group, and those having a hydroxyl group at both terminals of the molecule ($\alpha,\omega$-dihydroxy functional siloxane) are especially preferable.

On the other hand, the $C_1$-$C_{12}$ monovalent hydrocarbon groups represented by the general formula (1) include, for example, alkyl group, alkenyl group, aryl group, cycloalkyl group, aralkyl group and the like. These monovalent hydrocarbon groups may be either substituted or unsubstituted.

The above-mentioned alkyl groups may be linear, branched, or alicyclic, and include, for example, methyl group, ethyl group, propyl group, butyl group, 2-ethylbutyl group, octyl group and the like. The above-mentioned alkenyl groups include, for example, vinyl group, hexenyl group, allyl group and the like. The above-mentioned aryl groups include, for example, phenyl group, tolyl group, xylyl group, naphthyl group, diphenyl group and the like. The above-mentioned cycloalkyl groups include, for example, cyclohexyl group, cyclopentyl group and the like. The aralkyl groups include, for example, benzyl group, 2-phenylethyl group and the like. Unsubstituted methyl group and phenyl group are especially preferred.

Such organopolysiloxane (a1) may be combined at a ratio of usually 20-90 % by weight, preferably 30-80 % by weight with an antifouling paint composition [ii] which contains a solvent or the like, and at a ratio of usually 25-95 % by weight, preferably 35-85 % by weight with respect to 100 % by weight of the solid content of the antifouling paint composition [ii] in order to realize excellent antifouling performance.

Furthermore, commercially-available products can be used as the organopolysiloxane (a1) of the present invention. For example, there may be mentioned "YF3057" (GE Toshiba Silicones) having hydroxyl groups, "KE45" (Shin-Etsu Chemical Co., Ltd.) having oxime groups, "KE489" (Shin-Etsu Chemical Co., Ltd.) having alkoxy groups, etc.

Silica (a2)

The silica (a2) used in the present invention includes hydrophilic silica (surface-untreated silica) such as wet-process silica (hydrated silica), dry-process silica (fumed silica, anhydrous silica) and surface-treated hydrophobic silica such as hydrophobic wet silica and hydrophobic fumed silica. These may be used alone or in a combination thereof.

As the above-mentioned wet-process silica, though not specifically limited, there may be used, for example, silica having about 4 to about 8% of adsorbed water, a bulk density of 200-300g/L, a primary particle size of 10-30 μm, and a specific surface area (BET surface area) of 10 $m^2/g$ or more.

As the above-mentioned dry-process silica, though not specially limited, there may be used, for example, silica having a water content of 1.5% or less, a bulk density of 50-100g/L, a primary particle size of 8-20 μm, and a specific surface area of 10 $m^2/g$ or more.

The above-mentioned hydrophobic fumed silica is made from dry-process silica by surface-treating with organosilicon compounds such as methyltrichlorosilane, dimethyldichlorosilane, hexamethyldisilazane, hexamethylcyclotrisiloxane, octamethylcyclotetrasiloxane and the like. The water adsorption over time is small, and the water content is usually 0.3% or less, in many cases 0.1-0.2%. As such hydrophobic fumed silica, though not specially limited, there may be used, for example, silica having a primary particle size of 5-50 μm, a bulk density of 50-100g/L , and a specific surface area of 10 $m^2/g$ or more.

In addition, as mentioned below, when the heat-treated hydrophobic fumed silica is formed by heat treating silica together with the above-mentioned organopolysiloxane (a1), it has a water content of usually 0.2% or less, preferably 0.1% or less, more preferably 0.05-0.1%, since the water adsorbed on the surface of silica is physically reduced and/or removed. The other properties like the bulk density, etc. remain the same as the above hydrophobic silica.

Commercially-available products can be used for such silica (a2). For example, there may be mentioned "R974", "RX200", etc. of Nippon Aerosil Co., Ltd.

The organopolysiloxane (a1) and silica (a2) in the main agent component (A) of the present invention are preferably a heat-treated substance (a22) formed by prior heat treatment of the above organopolysiloxane (a1) and silica (a2), or a mixture of the heat-treated substance (a22) and an organopolysiloxane (a1) which is not heat treated. This is because, by making heat treatment of silica (a2) with a part or the whole of the organopolysiloxane (a1) in advance, an effect of improving the affinity of both components and suppressing coagulation of silica (a2) can be obtained. This heat treatment may be performed, for example, at normal pressure or under reduced pressure, at temperatures between 100 °C or more and the decomposition temperature of the added components or less, preferably between 100 and 300 °C, more preferably between 140 and 200 °C, usually for about 30 minutes to 3 hours.

Silica (a2) is combined with 100 parts by weight of the organopolysiloxane (a1) usually at the ratio of 1-100 parts by weight, preferably 2-50 parts by weight, more preferably 5-30 parts by weight. If the added amount of silica (a2) is less than the above range, sufficient film strength, film hardness or thixotropy may not be obtained, and a desired film thickness may not be obtained by one painting operation, especially by spray coating. If it is more than the above range, the viscosity of the paint may become excessively large.

By using the above-mentioned silica (a2), the resulting antifouling paint composition acquires increased stability during preparation or storage, and fluidity and thixotropy become improved. A coating film with a sufficient thickness is then formed even on a vertical surface and the like with a reduced number of painting operations; furthermore, excellent balance among properties such as hardness, tensile strength, extension, etc. as well as antifouling properties of the resulting film is obtained.

Organosilane (b1)

The organosilane and/or a partial hydrolyzate thereof (b1) used in the present invention have functional group (s) capable of undergoing condensation reaction with condensation reactive groups of organopolysiloxane (a1) which has at least two condensation reactive groups in the molecule. The organosilane as this component (b1) includes an organosilane represented by the following general formula (2).

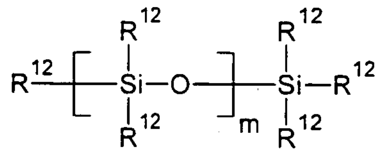

...... (2)

In the above general formula (2), $R^{12}$s may be identical or different, and each represent a condensation reactive group or a $C_1$-$C_8$ monovalent hydrocarbon group. However, at least 2, or preferably 3 or more of $R^{12}$ are condensation reactive groups. m represents an integer of 0 to 10, preferably 0 to 8.

The $C_1$-$C_8$ monovalent hydrocarbon group in the general formula (2) includes substituted or unsubstituted groups such as alkyl group, alkenyl group, aryl group, cycloalkyl group, aralkyl group and the like as in the case of the above-mentioned general formula (1).

The condensation reactive group in the general formula (2) includes the same ones as in the case of the general formula (1) above, and it is preferably hydroxyl group, oxime group, acetyloxy group or alkoxy group.

Further, an organosilane derived from partial hydrolysis of the above hydrolyzable groups such as, for example, acetyloxy group and alkoxy group can be used as the above-mentioned component (b1).

In the present invention, especially the organosilane containing the above-mentioned alkoxy group, that is, alkoxysilane (also called "alkylsilicate") or a partial hydrolyzate thereof can be preferably used. The above-mentioned alkoxysilane includes, for example, tetraalkylorthosilicate (tetraalkoxysilane) such as tetraethyl orthosilicate (TEOS) and the like, or alkyltrialkoxysilane such as methyltrimethoxysilane, ethyltrimethoxysilane, methyltriethoxysilane and the like.

Especially, in case of using an organopolysiloxane having hydroxyl groups at both terminals as component (a1), it is preferably used in combination with these alkylsilicates (alkoxysilanes) and/or a partial hydrolyzate thereof as the component (b1).

Commercially-available products can be used as such organosilane (b1). For example, there may be mentioned "Ethyl silicate 28" (Colcoat Co., Ltd.), "Orthoethyl silicate" (Tama Chemicals Co. , Ltd.) as tetraethyl orthosilicate, "Silicate 40" (Tama Chemicals Co., Ltd.), "TES40 WN" (Wacker Asahikasei Silicone Co., Ltd.) as partial hydrolyzate of tetraethyl orthosilicate, and "KBM-13" (Shin-Etsu Chemicals Co., Ltd.) as alkyltrialkoxysilane.

In the curable organopolysiloxane composition of the present invention, the ratio of the above organosilane and/or a partial hydrolyzate thereof (b1) with respect to the total amount of organopolysiloxane (a1) having condensation reactive groups at both terminals and silica (a2), [(b1)/{(a1)+(a2)}], is preferably 1-20 % by weight, more preferably 3-10 % by weight from the standpoint of giving excellent painting workability and sufficient antifouling performance of the coating film to be formed.

Tin compound (ac)

As to the first and second aspects of the curable organopolysiloxane composition of the present invention, tin compounds (ac1) represented by the following general formulas (I)-(V) are used as the tin compounds. These tin compounds may be used alone or in a combination thereof.

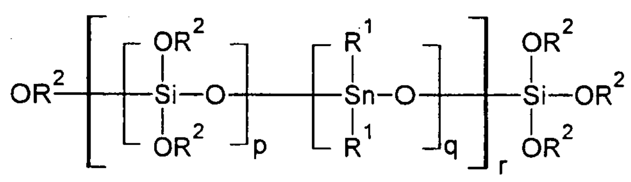

...... (I)

In the formula (I), $R^1$ represents a $C_1$-$C_{10}$ hydrocarbon group and $R^2$ represents a $C_1$-$C_4$ hydrocarbon group. p represents an integer of 1 to 10, q represents an integer of 1 to 4, and r represents an integer of 1 to 5.

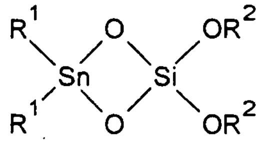

......(II)

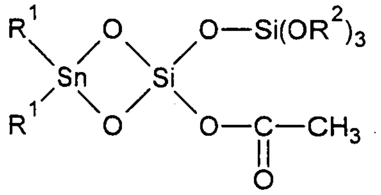

......(III)

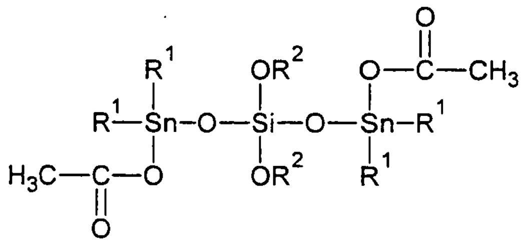

......(IV)

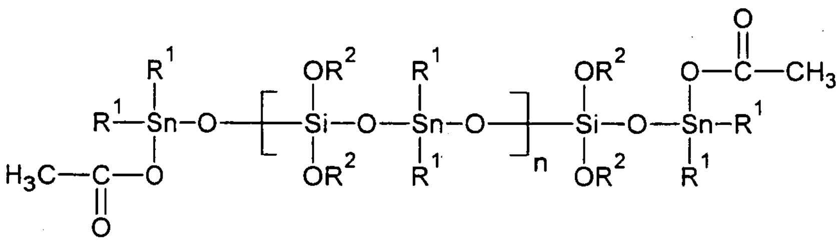

......(V)

In the formulas (II) - (V), $R^1$ represents a $C_1$-$C_{10}$ hydrocarbon group and $R^2$ represents a $C_1$-$C_4$ hydrocarbon group. In the formula (V), n represents an integer of 1 or larger.

Among the tin compounds represented by the above general formulas (I)-(V), a tin compound of which $R^1$ is butyl group and $R^2$ is ethyl group in the general formula (I) is preferred since the compound assures good adhesiveness to undercoated epoxy paint and brings the usable time for painting operation to a suitable range.

Commercially-available products can be used as such tin compounds (ac1), for example, there may be mentioned "U-700", "U-780", etc. (Nitto Kasei Co., Ltd.).

On the other hand, as to the third and fourth aspects of the curable organopolysiloxane composition of the present invention, tin compounds (ac2) represented by the following general formulas (V)-(VIII) are used as the tin compounds. These tin compounds may be used alone or in a combination thereof.

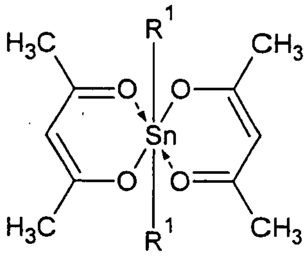

...... (VI)

In the formula (VI), $R^1$ represents a $C_1$-$C_{10}$ hydrocarbon group.

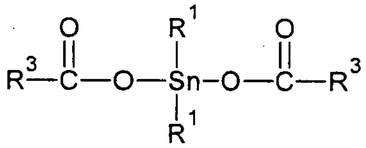

...... (VII)

In the formula (VII), $R^1$ represents a $C_1$-$C_{10}$ hydrocarbon group and $R^3$ represents a $C_1$-$C_9$ hydrocarbon group.

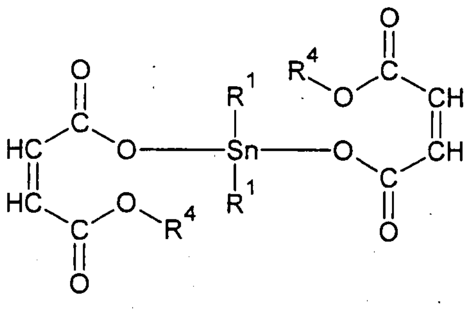

...... (VIII)

In the formula (VIII), $R^1$ represents a $C_1$-$C_{10}$ hydrocarbon group and $R^4$ represents a $C_1$-$C_3$ hydrocarbon group.

Among the tin compounds represented by the above general formulas (VI)-(VIII), dibutyltin acetoacetonate (also called "dibutyltin acetylacetonate"), dibutyltin diacetate, dibutyltin dipentoate, dibutyltin dioctoate, dibutyltin bis (ethyl malate) and dioctyltin bis (ethyl malate) are preferred since these compounds assure good adhesiveness to undercoated epoxy paint and bring the usable time for painting operation to a suitable range.

Commercially-available products can be used as such tin compounds (ac2). For example, there may be mentioned "U-200" as dibutyltin diacetate, "U-220H" as dibutyltin acetoacetonate, "U-840" as dioctyltin bis (ethyl malate), etc. (Nitto Kasei Co. , Ltd.) Also, preparation can be performed according to publicly-known methods such as by diluting with a solvent like xylene, toluene and the like.

These tin compounds (ac) are used alone as "curing accelerator component (C )" if the curable organopolysiloxane composition is a three-liquid type, or combined to the main agent component (A) and/or the curing agent component (B) if it is a two-liquid type.

In the curable organopolysiloxane composition of the present invention, the ratio of tin contained in the tin compound (ac) with respect to the total amount of the components (a1) and (a2) is preferably 0.001-2.0 % by weight, more preferably 0.01-1.0 % by weight when considering the reaction time of the paint.

Also, the ratio of tin contained in the above tin compound (ac) with respect to the total amount of components (a1), (a2), and (b1) is preferably 0.001-1.0 % by weight, more preferably 0.01-0.5 % by weight when considering the reaction time of the paint.

Liquid organopolysiloxane (d1)

In the present invention, a liquid organopolysiloxane (d1) may be additionally combined with the main agent

component (A) and/or the curing agent component (B). If the liquid organopolysiloxane (d1) is not combined, the adhesiveness between the antifouling coating film formed by the antifouling paint composition [ii] and an epoxy resin anticorrosive coating film tends to become excellent. On the other hand, if a non-reactive liquid organopolysiloxane (d11) is combined, the above-mentioned antifouling coating film has excellent antifouling properties, and if a reactive liquid organopolysiloxane (d12) is combined, the above antifouling coating film tends to have excellent antifouling properties and adhesiveness between films.

As the non-reactive liquid organopolysiloxane (d11) of the present invention, it is preferred to use non-reactive silicone oils which do not have reactivity with the organopolysiloxane (a1) represented by the following general formula (3a) or composition formula (3b) or do not have self-condensing properties. These silicone oils can be used alone or in a combination of two or more. Such non-reactive liquid organopolysiloxane (d11) is considered to be effective in forming an antifouling functional layer on the surface of the coating film obtained.

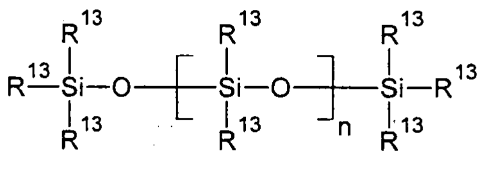

······ (3a)

In the above general formula (3a), $R^{13}$s may be identical or different, and represent an alkyl group, aryl group; aralkyl group, or fluoroalkyl group, each having 1-10 carbon atoms, and n represents an integer of 0 to 500.

Further, the silicone oil represented by the above general formula (3a) has the number average molecular weight of usually 180-20,000, preferably 1,000-10,000, and the viscosity of usually 20-30,000 mPa•s, preferably 50-3,000 mPa•s at 25 °C.

The silicone oil represented by the above general formula (3a) includes, for example, dimethyl silicone oil wherein $R^{13}$s are all methyl groups, or phenyl methyl silicone oil wherein the dimethyl silicone oil is partially substituted with phenyl groups. Especially methyl phenyl silicone oil is preferred.

Such methyl phenyl silicone oils include, specifically for example, commercially-available products such as "KF-54", "KF-56" and "KF-50" of Shin-Etsu Chemicals Co., Ltd., "SH510" and "SH550" of Dow Corning Toray Co. , Ltd. , "TSF431" and "TSF433" of Toshiba Silicone Co., Ltd., and the like.

$$R^{14}{}_{x}Si(R^{15}\text{-}Z)_{y}O_{(4-x-y)/2} \qquad (3b)$$

In the above composition formula (3b), $R^{14}$ represents hydrogen atom, or represents an alkyl group, aryl group, or aralkyl group, each having 1-10 carbon atoms, $R^{15}$ represents a $C_2$-$C_{10}$ divalent aliphatic hydrocarbon group which may be interrupted by an ether group, ester group or -NH-, Z represents a monovalent polar group such as amino group, carboxyl group, epoxy group, or a polyethylene glycol group or polypropylene glycol group of which terminal may be blocked with an alkyl group or acyl group, each having 1-6 carbon atoms. Further, x and y satisfy the relationships: $0.01 \leq x < 3.99$, $0.02 \leq y < 4$, and $0.02 \leq x+y < 4$.

Further, the silicone oil represented by the above composition formula (3b) has the number average molecular weight of usually 250-30,000, preferably 1,000-20,000, and has the viscosity of usually 20-30, 000 mPa•s, preferably 50-3, 000 mPa•s at 25 °C.

Preferred silicone oil represented by the above composition formula (3b) is, for example, one in which $R^{14}$ is methyl group or phenyl group, $R^{15}$ is methylene group, ethylene group or propylene group. Further, in the case where Z is a polyethylene glycol group or polypropylene glycol group of which terminal may be blocked with an alkyl group or acyl group, each having 1-6 carbon atoms, this alkyl group includes methyl group, ethyl group, propyl group, butyl group and the like, and this acyl group includes ketoxime group, acetyl group, propionyl group and the like, and the number of oxyethylene or oxypropylene unit as a repeating unit is preferably 10-60.

The silicone oil represented by the above composition formula (3b) includes specifically, for example, "SF8417" of Dow Corning Toray Co. Ltd., "ISI4700" and "ISI4701" of Toshiba Silicone Co., Ltd., "FZ3712" and "AFL-40" of Nippon Unicar Company Limited and the like as the silicone oil in which the polar group Z is amino group. Examples of the silicone oil in which the polar group Z is carboxyl group include "XI42-411" of Toshiba Silicone Co., Ltd., "SF8418" of Dow Corning Toray Co., Ltd., "FXZ4707" of Nippon Unicar Company Limited and the like. Further, examples of the silicone oil in which the polar group is epoxy group include "SF8411" of Dow Corning Toray Co., Ltd. , "XI42-301" of Toshiba Silicone Co., Ltd. , "L-93" and "T-29" of Nippon Unicar Company Limited and the like. Examples of the silicone oil in which the polar group Z is alkyl group or acyl group include "ISI4460", "ISI4445" and "ISI4446" of Toshiba Silicone Co., Ltd., "SH3746", "SH8400", "SH3749" and "SH3700" of Dow Corning Toray Silicone Co., Ltd., "KF6009" of Shin-Etsu Chemicals Co., Ltd., and the like.

On the other hand, as the reactive liquid organopolysiloxane (d12) in the present invention, for example, a silicone oil which has at least one group represented by the following general formula (3c) can be used preferably.

$$\equiv SiR^4OSiR^5_bY_{(3-b)} \quad (3c)$$

In the above formula (3c), $R^4$ represents an unsubstituted or substituted divalent hydrocarbon group or divalent hydrocarbon group which may contain ether linkage, $R^5$ represents an unsubstituted or substituted monovalent hydrocarbon group, Y represents a condensation reactive group and b represents 0, 1, or 2. The above-mentioned condensation reactive group is preferably at least one kind of condensation reactive group selected from the group consisting of hydroxyl group, oxime group, amino group, acetyloxy group and alkoxy group.

Such reactive liquid organopolysiloxane (d12) can be prepared by the reaction of a silicone oil represented, for example, by $H_3C\text{-}[SiR_2\text{-}O\text{-}]_n\text{-}SiR^4OH$ (wherein R is independently an alkyl group, aryl group, aralkyl group, or halogenated alkyl group, $R^4$ is the same as in the above formula (3c)) and an organosilane represented by $SiR^5_bY_{(4-b)}$ (wherein $R^5$ and Y are the same as in the above formula (3c), b is 0, 1, 2 or 3).

The liquid organopolysiloxane (d1) in the present invention is used by combining with the main agent component (A) and/or the curing agent component (B). In the case of combining the above component (d1) with the main agent component (A), the ratio of the component (d1) with respect to the total amount of the components (a1) and (a2) contained in the main agent component (A), [(d1)/{(a1)+(a2)}], is preferably 0.01-15 % by weight, more preferably 1-10 % by weight to obtain sufficient film strength and to form a good antifouling functional layer. Further, in the case of combining the above component (d1) with the curing agent component (B), the ratio of the component (d1) with respect to the component (b1) contained in the curing agent component (B), [(d1)/(b1)], is preferably 0.01-500 % by weight, more preferably 50-350 % by weight when considering the viscosity for handling the paint and the like.

## Silane coupling agent

In the present invention, the main agent component (A) and/or the curing agent component (B) may contain additionally a silane coupling agent. It is possible to improve the adhesiveness to an epoxy resin anticorrosive coating film by combining the silane coupling agent with the curable organopolysiloxane composition of the present invention.

When the commercial products described above are used as the organopolysiloxane (a1), a silane coupling agent may be already combined with such commercial products. However, if not combined, alternatively it may be combined with the main agent component (A) and/or the curing agent component (B) before packing a two liquid-type or three liquid-type curable organopolysiloxane composition.

Publicly-known silane coupling agents can be selected suitably for use depending on the painting target of the curable organopolysiloxane composition, and examples in the case of targeting an epoxy resin anticorrosive coating film include preferably 3-glycidoxypropylmethyldimethoxysilane, vinyltrimethoxysilane, vinyltriethoxysilane, 3-mercaptopropyltrimethoxysilane, N-phenylpropyltrimethoxysilane, N-phenylpropyltriethoxysilane and the like.

In the case of combining such silane coupling agent with the main agent component (A), the ratio with respect to the total amount of the components (a1) and (a2) contained in the main agent component (A) is preferably from 0.01 to 1 % by weight, more preferably 0.1-0.6 % by weight. Further, in the case of combining the silane coupling agent with the curing agent component (B), the ratio with respect to the component (b1) contained in the curing agent component (B) is preferably 0.01-50 % by weight, more preferably 0.1-30 % by weight.

## Color pigment (a3)

The main agent component (A) of the present invention may contain a color pigment (a3) if necessary. For these color pigments (a3), various publicly-known organic and inorganic pigments may be used alone or in a combination of two or more, and further, various coloring agents such as a dye may be contained.

The above-mentioned organic color pigments include carbon black, naphthol red, phthalocyanine blue and the like. Also, the above-mentioned inorganic color pigments include iron oxide red, iron oxide black, titanium white, balite powder, talc, chalk, iron oxide yellow, cobalt blue and the like. Among them, titanium white, iron oxide black, carbon black, iron oxide red and cobalt blue can be preferably used in the present invention.

The ratio of the above color pigment (a3) with respect to the total amount of components (a1) and (a2) contained in the main agent component (A), [(a3)/{(a1)+(a2)}], is preferably 0.01-30 % by weight, more preferably 0.1-20 % by weight.

## Solvent (a4)

The main agent component (A) of the present invention may contain a solvent (a4) if necessary. The solvent

(a4) includes publicly-known solvents such as aliphatic solvent, aromatic solvent, ketone solvent, ester solvent, ether solvent, alcohol solvent and the like. The above-mentioned aromatic solvent includes, for example, xylene, toluene and the like, the ketone solvent includes, for example, MIBK, cyclohexanone and the like, the ether solvent includes, for example, propyleneglycolmonomethylether, propyleneglycolmonomethyletheracetate (PGMAC) and the like, and the alcohol solvent includes, for example, isopropyl alcohol and the like.

These solvents can be combined in appropriate quantities to make the viscosity of the antifouling paint composition formed preferable for painting operation. For example, the ratio with respect to the total amount of the components (a1) and (a2), [(a4)/{(a1)+(a2)}], is preferably 0-50 % by weight, more preferably 0-30 % by weight. Further, such solvent may be combined with the curing agent component (B) or the cure-accelerator agent (C) in appropriate quantities.

Antifouling paint composition [ii]

The organopolysiloxane antifouling paint composition [ii] of the present invention contains a curable organopolysiloxane composition comprising at least the above-mentioned components, and in addition may contain, if necessary, publicly-known additives in appropriate quantities, such as an agent which imparts thixotropic properties, an inorganic dehydrating agent (stabilizer), an anti-sagging agent/antisettling agent (thickener), other coating film-forming component, a fungicide, an antifungal agent, an anti-aging agent, an antioxidant, an antistatic agent, a flame retardant, a thermal conduction-improving agent and the like.

Such optional components contained in the antifouling paint composition [ii] may be combined in advance with the main agent component (A), the curing agent component (B), or the cure-accelerator component (C) in appropriate quantities that do not impair the effect of the present invention, in more than one liquid of a two-liquid type or three-liquid type in which the above-mentioned organopolysiloxane composition is packed.

The antifouling paint composition [ii] of the present invention is obtained by mixing, for example, according to conventional methods, the contents of the pack of a two-liquid type or three-liquid type which are the components constituting the antifouling paint composition [ii], and if necessary, adding optional components sequentially or simultaneously.

Epoxy resin anticorrosive paint composition [i]

The preferable epoxy resin anticorrosive coating film [I] of the present invention is formed usually on the surface of a base material by curing an epoxy resin anticorrosive paint composition [i] which contains at least an epoxy resin (e1) and an amine-based curing agent for epoxy resin (e2). This antifouling paint composition [i] may contain a body pigment (e3), an anti-sagging agent (e4) if necessary.

Epoxy resin (e1)

The epoxy resin (e1) contained in the above-mentioned antifouling paint composition [i] includes, for example, bisphenol epoxy resin, glycidylester epoxy resin, glycidylamine epoxy resin, phenol novolac epoxy resin, cresol epoxy resin, dimer acid modified epoxy resin, aliphatic epoxy resin, alicyclic epoxy resin, epoxidized oil epoxy resin and the like. Especially, bisphenol epoxy resins such as bisphenol A-type and F-type are preferable for excellent adhesiveness to the base material of the anticorrosive coating film formed and anticorrosive properties thereof. These epoxy resins can be used alone or in a combination of two or more.

Such epoxy resin (e1) is desirably contained at the ratio of usually 10-60 % by weight, preferably 20-50 % by weight in the anticorrosive paint composition [i] containing a solvent and the like, and at the ratio of usually 10-70 % by weight, preferably 10-60 % by weight with respect to 100 % by weight of the solid content of the anticorrosive paint composition [i] in order to obtain excellent anticorrosive properties of the coating film.

Commercially-available products can be used as such epoxy resin (e1). There may be cited, for example, bisphenol epoxy resins such as "Epikote 828", "Epikote 834", "Epikote 1001", "Epikote 1004", "Epikote807","Epikote4004P", "Epikote 4007P", etc. of Japan Epoxy Resins Co., Ltd.

Amine-based curing agent for epoxy resin (e2)

As the amine-based curing agent (e2) for epoxy resin contained in the above-mentioned anticorrosive paint composition [i], for example, modified Mannich amines formed by Mannich condensation reaction of phenols, formalin and amine compounds, and/or aliphatic polyamines can be used. However, it is preferred to use mainly a polyamideamine which is formed by condensation of a dimer acid and a polyamine, and has reactive primary and secondary amino groups in the molecule for ease of handling of paint and enabling preferable usable time range for painting operation.

It is theoretically recommended to use an amine-based curing agent (e2) for epoxy resin in such an amount

that the number of amino groups of the amine-based curing agent (e2) becomes the same (chemical equivalence) as the number of epoxy groups of the epoxy resin (e1). However, in the present invention, the curing agent may be used in such an amount resulting in 0.35-0.9 equivalence, preferably 0.4-0.8 equivalence of amino group with respect to 1 equivalence of epoxy group. Further, the amine-based curing agent (e2) can be used, at the ratio of, for example, 10-80 parts by weight, preferably 20-70 parts by weight with respect to 100 parts by weight of the epoxy resin (e1).

Commercially-available products can be used as such amine-based curing agent (e2) for epoxy resin, and there may be mentioned, for example, "Raccamide TD966" (Dainippon Ink and Chemicals, Incorporated), "Sunmide 307D-60"(Sanwa Chemical Co., Ltd.), etc.

Body pigment (e3)

The body pigment (e3) which can be contained in the above-mentioned anticorrosive paint composition [i] includes, for example, publicly-known materials such as talc, silica, mica, clay, calcium carbonate, kaolin, alumina white, white carbon, aluminum hydroxide, magnesium carbonate, barium carbonate, barium sulfate, titanium dioxide, carbon black and the like. Especially, talc, barium sulfate, mica, titanium dioxide, and carbon black are preferably used in the present invention. These body pigments may be used alone or in a combination thereof. The body pigment (e3) may be contained, for example, in the ratio of 5-80 % by weight with respect to 100 % by weight of the solid content of the anticorrosive paint composition [i].

Anti-sagging agent (e4)

The anti-sagging agent (e4) contained in the above-mentioned anticorrosive paint composition [i] includes publicly-known materials, for example, organic clay wax such as amine salt, stearate, lecithinate, alkylsulfonate of Al, Ca and Zn, polyethylene wax, amide wax, hydrogenated castor oil wax, polyamide wax, a mixture of hydrogenated castor oil wax and polyamide wax, synthetic particulate silica, polyethylene oxide wax and the like. Of these, polyamide wax is preferably used in the present invention. This anti-sagging agent (e4) can be contained, for example, in the ratio of 0.1-5 % by weight with respect to 100 % by weight of the anticorrosive paint composition [i].

Each of the above components can be combined with the epoxy resin paint composition [i] according to conventional methods at the ratio as described above during preparation of the composition, by using, for example, commercially-available materials. Further, in addition to the above components, optional components such as a solvent, a liquid hydrocarbon resin, a surfactant, an anticorrosive pigment and the like which are used in an epoxy resin anticorrosive coating film may be added in appropriate quantities if necessary. Such epoxy resin paint composition may also be provided as a two-liquid type composition comprising a main agent component containing an epoxy resin (e1) and a curing agent component containing an amine-based curing agent (e2).

Antifouling coating film and antifouling composite coating film

The method for forming antifouling coating film and antifouling composite coating film

The antifouling composite coating film of the present invention is obtained by forming an epoxy resin anticorrosive coating film [I] on the surface of a base material, followed by painting an antifouling paint composition [ii] on the coating film, thus yielding an antifouling coating film [II].

The epoxy resin anticorrosive coating film [I] which is the base of the antifouling coating film [II] of the present invention is formed by stirring and mixing components constituting the above-mentioned epoxy resin paint composition [i] according to conventional methods, then painting or impregnating the mixture on the surface of the base material, followed by curing for about 0.5 to about 3 days in the atmosphere. The film thickness of the anticorrosive coating film [I] after curing may be controlled according to applications and the like. The film having excellent anticorrosive properties can be obtained, for example, by painting or impregnating the epoxy resin paint composition [i] once or more than once at a thickness of 30-150 μm/painting, followed by curing to yield the film thickness of 200-5000 μm.

This epoxy resin anticorrosive coating film [I] has excellent adhesiveness to a base material even when the material is FRP, steel, wood, aluminum alloy and the like. Especially, steel is preferable as the base material because of the adhesiveness. Further, the above base material may be treated by publicly-known surface treatment like sand blasting in order to improve adhesiveness to the anticorrosive coating film [I].

On the other hand, the above antifouling coating film [II] is also formed by stirring and mixing the above-mentioned antifouling paint composition [ii] according to conventional methods and painting the mixture on the surface of the anticorrosive coating film [I], followed by curing for about 0.5 to about 3 days in the air either by leaving or by forced ventilation under heating. The film thickness of the antifouling coating film [II] after curing may be controlled according to applications and the like. The film having excellent antifouling properties and adhesiveness to the epoxy

resin anticorrosive coating film [I] is obtained, for example, by painting or impregnating the antifouling paint composition [ii] once or more than once at a thickness of 30-150 μm/paint, followed by curing to yield the film thickness of 150-5000 μm.

Further, the anticorrosive coating film [I] on which the antifouling coating film [II] is formed may be cured completely, however, it is also possible to paint the antifouling paint composition [ii] on the anticorrosive coating film during the state of semi-dry to touch to form the antifouling coating film [II] for improving adhesiveness and the like.

The antifouling coating film [II] of the present invention is preferably used in the antifouling composite coating film which is obtained by laminating the antifouling coating film [II] directly on the surface of the epoxy resin anticorrosive coating film [I] (that is, without intervening of coating films of other intermediate layers). However, the antifouling paint composition [ii] of the present invention can be also used to paint directly on the surface of the above base material and form the antifouling coating film [II] which is in direct contact with the base material.

Utilization of the antifouling coating film and the antifouling composite coating film

The antifouling coating film or antifouling composite coating film formed according to the above-mentioned methods can be formed on the surface of various base materials, for example, underwater structures such as water feed/exhaust ports of a thermal/nuclear power plant, films for preventing sludge diffusion in various maritime civil engineering works such as coastal roads, undersea tunnels, port facilities, canals and channels, or ships, fishery materials, etc. (for example, ropes, fishnets, fishing gears, floats and buoys).

It is possible to lower the surface free energy of the surface of a base material, by forming the above-mentioned antifouling coating film or antifouling composite coating film on the surface of the base material. Such coating film having low surface free energy is resistant to attaching of aquatic organisms such as ulva, barnacle, green laver, serpula, oyster, bugula neritina and the like. Even if such aquatic organisms adhere to the surface of the coating film, these are removed easily by the stream resistance of sea water or fresh water, thus the antifouling properties are effective continuously for a long time. Therefore, such antifouling method is effective to the base material of which surface contacts continuously or intermittently with sea water or fresh water, especially underwater structures, ship shell plates, fish nets, and fishing gears. Further, it can maintain the function of these underwater structures for a long time or to prevent blocking of fishnet meshes.

EXAMPLES

Hereinafter, the present invention will be described further in detail by Examples and Comparative examples.

(Preparation of the curable organopolysiloxane antifouling paint composition)

A three-liquid type curable organopolysiloxane composition listed in Table 1 comprising a main agent component (A), a curing agent component (B), and a cure-accelerator agent component (C) was prepared. 12 kinds of cure-accelerator (C) were prepared by using 12 kinds of tin compounds, respectively.

Subsequently, antifouling paint compositions corresponding to each of Examples 1-11 and Comparative examples 1-8 were prepared by mixing 77 parts by weight of the main agent component (A), 18 parts by weight of the curing agent component (B), and 5 parts by weight of the cure-accelerator agent component (C) thoroughly using a mixer until a homogeneous mixture was formed, wherein components (a1), (a2), (b1), (ac) or non-(ac), and (d1) were contained at the mixing amounts listed in Tables 3 and 4.

(Preparation of the epoxy resin paint composition)

After preparing a main agent component (X) and a curing agent component (Y) for the epoxy resin paint composition each having the component mixing amounts listed in Table 2, a paint composition for forming the epoxy resin anticorrosive coating film was prepared by mixing 85 parts by weight of the main agent component (X) and 15 parts by weight of the curing agent component (Y) thoroughly using a mixer until a homogeneous mixture was formed.

[Test examples]

For the antifouling composite coating film obtained from the epoxy resin paint composition and the curable organopolysiloxane paint composition prepared as mentioned above, a tensile test, a tape delamination test, a fresh water immersion test, and an antifouling test were performed according to the following instructions. The test results are listed in Tables 3 and 4.

(Tensile test)

The above-mentioned epoxy resin paint composition was applied to a sandblasted steel plate with a size of 100 mm x 300 mm x 2.3 mm by a spray coater (Anest Iwata Corporation, trade name: Wider Spray Gun W-77-2G) at room temperature, and dried for a day to form an epoxy resin anticorrosive coating film having a film thickness of 200 μm in the dry state. Subsequently, the antifouling paint compositions prepared in Examples 1-11 and Comparative examples 1-8 were applied to the above dried-anticorrosive coating film by a spray coater (Anest Iwata Corporation, trade name: Wider Spray Gun W-77-2G) at room temperature, until its thickness became 150 μm in the dry state, and then dried for a day. As a result, the coating films using the antifouling paint composition prepared in Comparative examples 3-8 were not cured, therefore, only the cured-antifouling coating films formed by the antifouling paint compositions of Examples 1-11 and Comparative examples 1-2 were subjected to a tensile test.

The tensile test was performed according to the method specified by JIS K 5600-5-7 (ISO4624). A stainless steel test cylinder (Dolly piece) having a cross sectional area of 2 $cm^2$ was glued to a test plate which was coated with cured antifouling composite coating films using an adhesive (GE Toshiba Silicones "TSE399"). After making a cut around this Dolly piece using a cutter, the adherence strength was measured by a pull off adhesion tester.

(Tape delamination test)

The above-mentioned epoxy resin paint composition was applied to a sandblasted steel plate with a size of 100 mm x 300 mm x 2. 3 mm, on which a masking tape (trade name: "Architectural Masking Tape", Nichiban Co. , Ltd.) was glued at the center, using a spray coater (Anest Iwata Corporation, trade name: Wider Spray Gun W-77-2G) at room temperature, and dried for a day to form an epoxy resin anticorrosive coating film having a film thickness of 200 μm in the dry state. Subsequently, the antifouling paint compositions prepared in Examples 1-11 and Comparative examples 1-8 were applied to the above dried-anticorrosive coating film using a spray coater (Anest Iwata Corporation, trade name: Wider Spray Gun W-77-2G) at room temperature, until its thickness became 150 μm in the dry state, and then dried for a day. As a result, the coating films of the antifouling paint compositions prepared in Comparative examples 3-8 were not cured, therefore, only the cured-antifouling composite coating films formed by the antifouling paint composition of Examples 1-11 and Comparative examples 1-2 were subjected to a tape delamination test.

After generating a level difference on the coating film by removing the glued-masking tape, the portion of the different levels was rasped strongly with finger cushion to delaminate the coating film, and the maximum value of the delaminated length was measured. If the adhesion is sufficient, the delamination should be 0 mm, if not, the length would become large.

(Fresh water immersion test)

The above-mentioned epoxy resin paint composition was applied to a sandblasted steel plate with a size of 100 mm x 300 mm x 2.3 mm using a spray coater (Anest Iwata Corporation, trade name: Wider Spray Gun W-77-2G) at room temperature, and dried for a day to form an epoxy resin anticorrosive coating film having a film thickness of 200 μm in the dry state. Subsequently, the antifouling paint compositions prepared in Examples 1-11 and Comparative examples 1-8 were applied to the above dried-anticorrosive coating film using a spray coater (Anest Iwata Corporation, trade name: Wider Spray Gun W-77-2G) at room temperature, until its thickness became 150 μm in the dry state, and then dried for a day. As a result, the coating films of the antifouling paint compositions prepared in Comparative examples 3-8 were not cured, therefore, only the cured-antifouling composite coating films formed by the antifouling paint compositions of Examples 1-11 and Comparative examples 1-2 were subjected to a fresh water immersion test.

The cured-composite coating film was immersed in deionized water maintained at a temperature of 23 °C for 6 months. The degree of generated blister was evaluated according to a method specified by ASTM D714. The size and the density of blister according to ASTM D714 were determined by the criterion described in Table 5. When, for example, blisters of size 8 (relatively small blister) are found to be distributed moderately, the evaluation is expressed as 8M.

(Antifouling test)

The above-mentioned epoxy resin paint composition was applied to a sandblasted steel plate with a size of 100 mm × 300 mm × 2.3 mm using a spray coater (Anest Iwata Corporation, trade name: Wider Spray Gun W-77-2G) at room temperature, and dried for a day to form an epoxy resin anticorrosive coating film having a film thickness of 200 μm in the dry state. Subsequently, the antifouling paint compositions prepared in Examples 1-11 and Comparative examples 1-8 were applied to the above dried-anticorrosive coating film using a spray coater(Anest Iwata Corporation, trade name: Wider Spray Gun W-77-2G) at room temperature, until its thickness became 150 μm in the dry state, and

then dried for a day. As a result, the coating films of the antifouling paint compositions prepared in Comparative examples 3-8 were not cured, therefore, only the cured-antifouling composite coating films formed by the antifouling paint compositions of Examples 1-11 and Comparative examples 1-2 were subjected to an antifouling test.

The test plate coated with the cured-antifouling composite coating film was immersed and settled in seawater of Nagasaki Bay of Nagasaki prefecture for 12 months. Evaluation of the antifouling performance was evaluated by visual inspection after 6 months and 12 months.

Table 1 Compounding components of the three-liquid type curable organopolysiloxane compositions

| Package | Component | | General term/Chemical formula | Amount (parts by weight) | Manufacturer | Trade name | Examples/ Comparative examples |
|---|---|---|---|---|---|---|---|
| Main agent component (A) | (a1) Organopolysiloxane | | HO-[Si(CH$_3$)$_2$-O-]$_n$-H | 70 | GE Toshiba Silicones | XC-86-B7191 | |
| | (a2) Silica | | Surface-treated hydrophobic silica | | GE Toshiba Silicones | YF3057 | |
| | (a3) Color pigment | | (a2-1) Titanium white | 10 | SCM | RCL-575 | |
| | | | (a3-2) Carbon black | 0.1 | Mitsubishi Chemical | MA-100 | |
| | (a4) Solvent | | Xylene | 19.9 | | | |
| | | | Total | 100 | | | |
| Curing agent component (B) | (b1) Organosilane | | H$_5$C$_2$O-[Si(OC$_2$H$_5$)$_2$-O-]$_n$-C$_2$H$_5$ | 15 | Wacker Asahikasei Silicone | TES40 WN | |
| | (d1) Organopolysiloxane *1 | (d11-1) non-reactive | H$_3$C-[SiR$^a_2$-O-]$_n$-CH$_3$ *2 | 35 | GE Toshiba Silicones | TSF433 | Ex. 1,4,9,11 Com. Ex. 1-5 |
| | | (d11-2) non-reactive | H$_3$C-[SiR$^a_2$-O-]$_n$-CH$_3$ *3 | 35 | Shin-Etsu Chemicals | KF-96-100 | Ex. 2,5,8,10 |
| | | (d12) reactive | ~[SiR$^a_2$-O-]$_n$-SiR$^b$-O-Si-R$^c$[O-N=C(CH$_3$)(C$_2$H$_5$) *4 | 35 | Shin-Etsu Chemicals | BCA-011 | Ex. 3,6,7 Com. Ex. 6-8 |
| | Solvent | | Xylene | 50 | | | |
| | | | Total | 100 | | | |
| Cure-accelerator (C) | Tin compound *5 | (ac1) | (ac-1) Product of salt of dibutyltin and ethyl orthosilicate *6 | 3 | Nitto Kasei | U-700 | Ex. 1-3 |
| | | | (ac-2) Product of salt of dioctyltin and ethyl orthosilicate *7 | 3 | Nitto Kasei | U-780 | Ex. 4-6 |
| | | (ac2) | (ac-3) dibutyltin diacetate | 3 | Nitto Kasei | U-200 | Ex. 7 |
| | | | (ac-4) dioctyltin bis(ethyl malate) | 3 | Nitto Kasei | U-840 | Ex. 8 |
| | | | (ac-5) dibutyltin acetylacetonate | 3 | Nitto Kasei | U-220H | Ex. 9 |
| | | | (ac-6) dibutyltin dineodecanoate | 3 | Nitto Kasei | U-280 | Ex. 10 |
| | | | (ac-7) dioctyltin dineodecanoate | 3 | Nitto Kasei | U-830 | Ex. 11 |
| | | non-(ac) | dibutyltin dilaurate | 3 | Nitto Kasei | U-100 | Com. Ex. 1 |
| | | | dioctyltin bis(oleyl malate) | 3 | Nitto Kasei | U-15 | Com. Ex. 2 |
| | | | dibutyltin oxide | 3 | Nitto Kasei | U-300 | Com. Ex. 3,6 |
| | | | dioctyltin oxide | 3 | Nitto Kasei | U-800 | Com. Ex. 4,7 |
| | | | Tin octylate | 3 | Nitto Kasei | U-28 | Com/ Ex. 5,8 |
| | Solvent | | Xylene | 97 | | | |
| | | | Total | 100 | | | |

(Table 1 additional note)

*1: In Examples 1-11 and Comparative examples 1-8, any one kind of each from (d11-1), (d11-2) and (d12) was used.

*2: dimethyldiphenylsilicone oil (about 70% methyl group and about 30% phenyl group). ca. 450 mPa•s. $R^a$ represents methyl group or phenyl group.

*3: dimethyldiphenylsilicone oil (about 95% methyl group and about 5% phenyl group). ca. 100 mPa•s. $R^a$ represents methyl group or phenyl group.

*4: dimethyldiphenylsilicone oil (about 95% methyl group and about 5% phenyl group). ca. 100 mPa•s. $R^a$ represents methyl group or phenyl group. $R^b$: $-C_3H_6-$, $R^c$: $-CH=CH_2$.

*5 : In Examples 1-11 and Comparative examples 1-8, any one kind of each from those corresponding to the tin compounds (ac) of the present invention, (ac-1)-(ac-7), and those not corresponding to the tin compounds (ac) was used.

*6 : In the above-mentioned formula (I), the compound in which p = q = r = 1, $R^1$ represents butyl group and $R^2$ represents ethyl group.

*7 : In the above-mentioned formula (I), the compound in which p = q = r = 1, $R^1$ represents octyl group and $R^2$ represents ethyl group.

Table 2 Compounding components of the epoxy resin anticorrosive coating compositions

| Package | Component | General term | Amount (parts by weight) | Manufacturer | Trade name |
|---|---|---|---|---|---|
| Main agent component (X) | (e1) Epoxy resin | | 30 | Japan Epoxy Resin | |
| | (e3) Body pigment pigment | Talc | 25 | Fuji Talc Kogyo | Talc F-2 |
| | | Barium sulfate | 10 | Sakai Chemical Industry | Bariun Sulfate BA |
| | (e4) Anti-sagging agent | Polyamide wax | 2 | Kusumoto Chemicals | Disparlon 6650 |
| | Solvent | Xylene | 9 | | |
| | | Methylisobutylketone | 9 | | |
| | | Total | 85 | | |
| Curing agent component (Y) | (e2) Amine-based cuaring agent | Polyamideamine | 10 | Dainippon Ink and Chemicals | Raccamide TD966 |
| | Solvent | Xylene | 2 | | |
| | | n-butanol | 3 | | |
| | | Total | 15 | | |

Table 3 Compounding components of the antifouling coating films and the results of the tests

| | | | | Example | | | | | | Comparative example | | | | |
|---|---|---|---|---|---|---|---|---|---|---|---|---|---|---|
| | | | | 1 | 2 | 3 | 4 | 5 | 6 | 1 | 2 | 3 | 4 | 5 |
| Component (parts by weight, solid content) | Main agent component (A) | (a1)+(a2) | Organopolysiloxane (a1) and Silica (a2) | 76.2 | 76.2 | 76.2 | 76.2 | 76.2 | 76.2 | 76.2 | 76.2 | 76.2 | 76.2 | 76.2 |
| | | (a3) | Titunium white (a3-1) and Carbon black (a3-2) | 10.9 | 10.9 | 10.9 | 10.9 | 10.9 | 10.9 | 10.9 | 10.9 | 10.9 | 10.9 | 10.9 |
| | Curing agent (B) | (b1) | Partial hydrolyzate of organosilane (b1) | 3.8 | 3.8 | 3.8 | 3.8 | 3.8 | 3.8 | 3.8 | 3.8 | 3.8 | 3.8 | 3.8 |
| | | (d1) | non-reactive organopolysiloxane (d11-1) | 8.9 | | | 8.9 | | | 8.9 | 8.9 | 8.9 | 8.9 | 8.9 |
| | | | non-reactive organopolysiloxane (d11-2) | | 8.9 | | | 8.9 | | | | | | |
| | | | reactive organopolysiloxane (d12) | | | 8.9 | | | 8.9 | | | | | |
| | Cure-accelerator (C) | (ac) | Product of salt of dibutyltin and ethyl orthosilicate (ac-1) | 0.2 | 0.2 | 0.2 | | | | | | | | |
| | | | Product of salt of dioctyltin and ethyl orthosilicate (ac-2) | | | | 0.2 | 0.2 | 0.2 | | | | | |
| | | | dibutyltin dilaurate | | | | | | | 0.2 | | | | |
| | | | dioctyltin bis(oleyl malate) | | | | | | | | 0.2 | | | |
| | | | dibutyltin oxide | | | | | | | | | 0.2 | | |
| | | | dioctyltin oxide | | | | | | | | | | 0.2 | |
| | | | Tin octylate | | | | | | | | | | | 0.2 |
| | | content of tin contained in the tin compound above | | 0.021 | 0.021 | 0.021 | 0.017 | 0.017 | 0.017 | 0.028 | 0.019 | 0.072 | 0.049 | 0.044 |
| | | | Total | 100 | 100 | 100 | 100 | 100 | 100 | 100 | 100 | 100 | 100 | 100 |
| Result | Adhesive property | Tensile test (JIS K 5600-5-7, ISO 4624) [MPa] | | 2.1 | 2.2 | 2.5 | 2.1 | 2.1 | 2.2 | 1.1 | 0.9 | - | - | - |
| | | Tape delamination test | | 1 mm | 0 mm | 0 mm | 1 mm | 0 mm | 0 mm | infinit | infinit | - | - | - |
| | | Fresh water immersion test | | None | None | None | None | None | None | 4D | 4D | - | - | - |
| | Antifouling property | 6 months | | Good | Good | Good | Good | Good | Good | Good | Good | none of data | none of data | none of data |
| | | 12 months | | Good | Good | Good | Good | Good | Good | Good | Good | | | |

Table 4 Compounding components of the antifouling coating films and the results of the tests

| | | | | Example | | | | | Comparative example | | |
|---|---|---|---|---|---|---|---|---|---|---|---|
| | | | | 7 | 8 | 9 | 10 | 11 | 6 | 7 | 8 |
| Component (parts by weight, solid content) | Main agent component (A) | (a1)+(a2) | Organopolysiloxane (a1) and Silica (a2) | 76.2 | 76.2 | 76.2 | 76.2 | 76.2 | 76.2 | 76.2 | 76.2 |
| | | (a3) | Titunium white (a3-1) and Carbon black (a3-2) | 10.9 | 10.9 | 10.9 | 10.9 | 10.9 | 10.9 | 10.9 | 10.9 |
| | Curing agent (B) | (b1) | Partial hydrolyzate of organosilane (b1) | 3.8 | 3.8 | 3.8 | 3.8 | 3.8 | 3.8 | 3.8 | 3.8 |
| | | (d1) | non-reactive organopolysiloxane (d11-1) | | | 8.9 | | 8.9 | | | |
| | | | non-reactive organopolysiloxane (d11-2) | | 8.9 | | 8.9 | | | | |
| | | | reactive organopolysiloxane (d12) | 8.9 | | | | | 8.9 | 8.9 | 8.9 |
| | Cure-accelerator (C) | (ac) | dibutyltin diacetate (ac-3) | 0.2 | | | | | | | |
| | | | dioctyltin bis(ethyl malate) (ac-4) | | 0.2 | | | | | | |
| | | | dibutyltin acetylacetonate (ac-5) | | | 0.2 | | | | | |
| | | | dibutyltin dineodecanoate (ac-6) | | | | 0.2 | | | | |
| | | | dioctyltin dineodecanoate (ac-7) | | | | | 0.2 | | | |
| | | | dibutyltin oxide | | | | | | 0.2 | | |
| | | | dioctyltin oxide | | | | | | | 0.2 | |
| | | | Tin octylate | | | | | | | | 0.2 |
| | | content of tin contained in the tin compound above | | 0.072 | 0.040 | 0.058 | 0.044 | 0.031 | 0.101 | 0.070 | 0.044 |
| | | | Total | 100 | 100 | 100 | 100 | 100 | 100 | 100 | 100 |
| Result | Adhesive property | Tensile test (JIS K 5600-5-7, ISO 4624) [MPa] | | 2.8 | 2.6 | 2.4 | 2.1 | 2.1 | - | - | - |
| | | Tape delamination test | | 0 mm | 0 mm | 0 mm | 1 mm | 0 mm | - | - | - |
| | | Fresh water immersion test | | None | None | None | 8F | 8F | - | - | - |
| | Antifouling property | 6 months | | Good | Good | Good | Good | Good | none of data | none of data | none of data |
| | | 12 months | | Good | Good | Good | Good | Good | | | |

Table 5 Criterion of fresh water immersion test

| Density | | Size | |
|---|---|---|---|
| None | None | (Evaluated by comparing with reference photo) | |
| less than few | FF | | |
| Few | F | small | 8 |
| Medium | M | \| | 6 |
| Medium - dense | MD | \| | 4 |
| Dense | D | large | 2 |

## Claims

**1.** A three-liquid type curable organopolysiloxane composition comprising,

(A) a main agent component containing an organoplolysiloxane (a1) which has at least two condensation reactive groups in the molecule and silica (a2),
(B) a curing agent component containing an organosilane and/or a partial hydrolyzate thereof (b1), wherein the organosilane has functional group(s) capable of undergoing condensation reaction with the condensation reactive groups of the organopolysiloxane (a1) which has at least two condensation reactive groups in the molecule, and
(C) a cure-accelerator component containing at least one kind of tin compound (ac) selected from the group consisting of tin compounds represented by the following formulas (I) - (V);

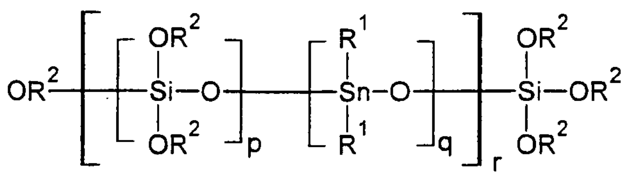
······(I)

(in the formula (I), $R^1$ represents a $C_1$-$C_{10}$ hydrocarbon group , $R^2$ represents a $C_1$-$C_4$ hydrocarbon group, p represents an integer of 1 to 10, q represents an integer of 1 to 4, and r represents an integer of 1 to 5;)

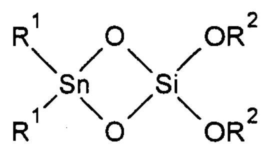
······(II)

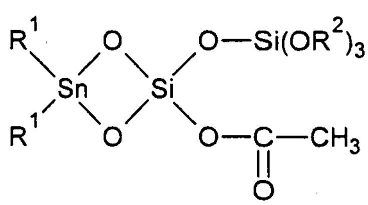
······(III)

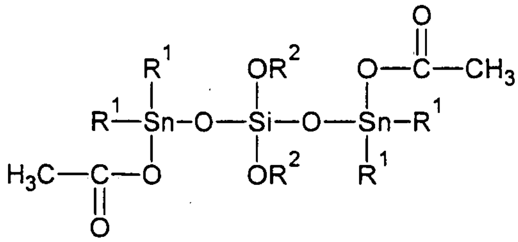

...... (IV)

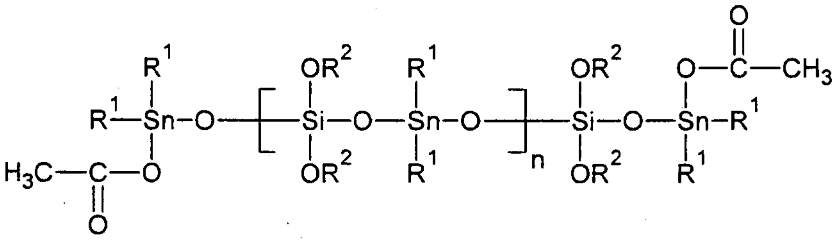

...... (V)

(in the formulas (II) - (V), $R^1$ represents a $C_1$-$C_{10}$ hydrocarbon group, $R^2$ represents a $C_1$-$C_4$ hydrocarbon group, and in the formula (V), n represents an integer of 1 or larger.)

**2.** A two-liquid type curable organopolysiloxane composition comprising,

(A) a main agent component containing an organoplolysiloxane (a1) which has at least two condensation reactive groups in the molecule and silica (a2),
(B) a curing agent component containing an organosilane and/or a partial hydrolyzate thereof (b1), wherein the organosilane has functional group(s) capable of undergoing condensation reaction with the condensation reactive groups of the organopolysiloxane(a1) which has at least two condensation reactive groups in the molecule, and

at least one kind of tin compound (ac) combined with the main agent component (A) or the curing agent component (B), wherein the tin compound is selected from the group consisting of tin compounds represented by the above-mentioned formulas (I) - (V).

**3.** The curable organopolysiloxane composition according to claim 1 or 2, wherein at least one kind of tin compound (ac) selected from the group consisting of tin compounds represented by the above-mentioned formulas (1) - (V) is a tin compound having a siloxane bond.

**4.** A three-liquid type curable organopolysiloxane composition to be used for direct coating on an epoxy resin anticorrosive coating film, comprising,

(A) a main agent component containing an organoplolysiloxane (a1) which has at least two condensation reactive groups in the molecule and silica (a2),
(B) a curing agent component containing an organosilane and/or a partial hydrolyzate thereof, wherein the organosilane has functional group(s) capable of undergoing condensation reaction with the condensation reactive groups of the organopolysiloxane (a1) which has at least two condensation reactive groups in the molecule, and
(C) a cure-accelerator component containing at least one kind of tin compound (ac) selected from the group consisting of tin compounds represented by the following formulas (VI) - (VIII);

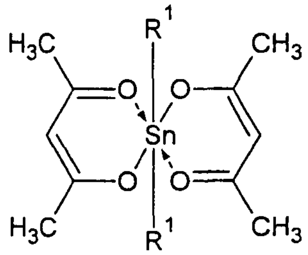

······(VI)

(in the formula (VI), $R^1$ represents a $C_1$-$C_{10}$ hydrocarbon group;)

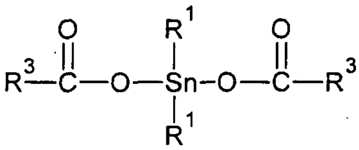

······(VII)

(in the formula (VII), $R^1$ represents a $C_1$-$C_{10}$ hydrocarbon group and $R^3$ represents a $C_1$-$C_9$ hydrocarbon group;)

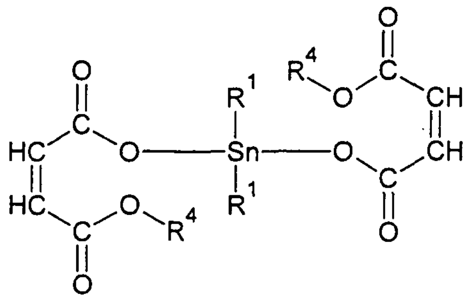

······(VIII)

(in the formula (VIII), $R^1$ represents a $C_1$-$C_{10}$ hydrocarbon group and $R^4$ represents a $C_1$-$C_3$ hydrocarbon group.)

**5.** A two-liquid type curable organopolysiloxane composition to be used for direct coating on an epoxy resin anticorrosive coating film, comprising,

(A) a main agent component containing an organopolysiloxane (a1) which has at least two condensation reactive groups in the molecule and silica (a2),
(B) a curing agent component containing an organosilane and/or a partial hydrolyzate thereof (b1), wherein the organosilane has functional group(s) capable of undergoing condensation reaction with the condensation reactive groups of the organopolysiloxane' (a1) which has at least two condensation reactive groups in the molecule, and

a cure-accelerator component combined with the main agent component (A) and/or the curing agent component (B), wherein the cure-accelerator component contains at least one kind of tin compound (ac) selected from the group consisting of tin compounds represented by the above formulas (VI) - (VIII).

**6.** The curable organopolysiloxane composition according to claim 4 or 5, wherein at least one kind of the tin compound (ac) selected from the group consisting of tin compounds represented by the above-mentioned formulas (VI) - (VIII) is at least one kind of tin compound selected from the group consisting of dibutyltin acetoacetate, dibutyltin diacetate, dibutyltin dipentoate, dibutyltin dioctoate, dibutyltin dineodecanoate, dioctyltin dineodecanoate, dibutyltin bis(ethyl malate), and dioctyltin bis(ethyl malate).

**7.** The curable organopolysiloxane composition according to any of claims 1 to 6, wherein the amount of tin contained in the tin compound (ac) is 0.001-2.0% by weight with respect to the total amount of organopolysiloxane (a1) and silica (a2).

**8.** The curable organopolysiloxane composition according to any of claims 1 to 7, wherein the amount of tin contained in the tin compound (ac) is 0.01-1.0 % by weight with respect to the total amount of organopolysiloxane (a1) and silica (a2).

**9.** The curable organopolysiloxane composition according to any of claims 1 to 8, wherein the amount of tin contained in the tin compound (ac) is 0.001-1.0 % by weight with respect to the total amount of organopolysiloxane (a1), silica (a2) and the organosilane and/or a partial hydrolyzate thereof (b1).

**10.** The curable organopolysiloxane composition according to any of claims 1 to 9, wherein the amount of tin contained in the tin compound (ac) is 0.01-0.5 % by weight with respect to the total amount of organopolysiloxane (a1), silica (a2), and the organosilane and/or a partial hydrolyzate thereof (b1).

**11.** The curable organopolysiloxane composition according to any of claims 1 to 10, wherein the organopolysiloxane (a1) in the main agent component (A) is an organopolysiloxane containing in the molecule at least 2 functional groups selected each independently from the group consisting of hydroxyl group, oxime group, amino group, acetyloxy group, and alkoxy group.

**12.** The curable organopolysiloxane composition according to claim 11, wherein the organopolysiloxane (a1) in the main agent component (A) is an organopolysiloxane having functional groups each independently selected from the group consisting of hydroxyl group, oxime group, amino group, acetyloxy group, and alkoxy group at the both terminals of the molecule.

**13.** The curable organopolysiloxane composition according to any of claims 1 to 12, wherein the organosilane and/or a partial hydrolyzate thereof (b1) in the curing agent component (B) is an organosilane and/or a partial hydrolyzate thereof having hydroxyl group, oxime group, acetyloxy group, or alkoxy group.

**14.** The curable organopolysiloxane composition according to any of claims 1 to 13, wherein the organosilane and/or a partial hydrolyzate thereof (b1) in the curing agent component (B) is an alkylsilicate and/or a partial hydrolyzate thereof.

**15.** The curable organopolysiloxane composition according to any one of claims 1 to 14, wherein
the organopolysiloxane (a1) in the main agent component (A) is an organopolysiloxane having hydroxyl groups at both terminals, and
the organosilane and/or a partial hydrolyzate thereof (b1) in the curing agent (B) is an alkylsilicate and/or a partial hydrolyzate thereof.

**16.** The curable organopolysiloxane composition according to any of claims 1 to 15, wherein the organopolysiloxane (a1) and silica (a2) in the main agent component (A) is a heat-treated substance (a22) formed by heat-treating organopolysiloxane (a1) and silica (a2) in advance.

**17.** The curable organopolysiloxane composition according to any of claims 1 to 15, wherein the organopolysiloxane (a1) and silica (a2) in the main agent component (A) is a mixture of a heat-treated substance (a22) formed by heat-treating the organopolysiloxane (a1) and silica (a2) in advance and a non-heat treated organopolysiloxane (a1).

**18.** The curable organopolysiloxane composition according to any of claims 1 to 17, wherein the main agent component (A) contains additionally a color pigment (a3).

**19.** The curable organopolysiloxane composition according to claim 18, wherein the color pigment (a3) is at least one kind of color pigment selected from the group consisting of titanium white, iron oxide black, carbon black, iron oxide red, and cobalt blue.

**20.** The curable organopolysiloxane composition according to claim 18, wherein the added amount of the color pigment (a3) is 0.01-30 % by weight with respect to the total amount of organopolysiloxane (a1) and silica (a2).

**21.** The curable organopolysiloxane composition according to claim 18, wherein the added amount of the color pigment (a3) is 0.1-20 % by weight with respect to the total amount of organopolysiloxane (a1) and silica (a2).

**22.** The curable organopolysiloxane composition according to any of claims 1 to 21, wherein the main agent component (A) contains additionally a solvent (a4).

**23.** The curable organopolysiloxane composition according to any of claims 1 to 22, wherein the added amount of the organosilane and/or a partial hydrolyzate thereof (b1) is 1-20 % by weight with respect to the total amount of organopolysiloxane (a1) and silica (a2).

**24.** The curable organopolysiloxane composition according to any of claims 1 to 23, wherein the added amount of the organosilane and/or a partial hydrolyzate thereof (b1) is 3-10 % by weight with respect to the total amount of organopolysiloxane (a1) and silica (a2).

**25.** The curable organopolysiloxane composition according to any of claims 1 to 24, wherein a liquid organopolysiloxane (d1) is additionally combined with the main agent component (A) and/or the curing agent component (B).

**26.** The curable organopolysiloxane composition according to claim 25, wherein the number average molecular weight (Mn) of the liquid organopolysiloxane (d1) measured by GPC is 400-10,000.

**27.** The curable organopolysiloxane composition according to claim 25, wherein the liquid organopolysiloxane (d1) is a non-reactive liquid organopolysiloxane (d11).

**28.** The curable organopolysiloxane composition according to claim 27, wherein the non-reactive liquid organopolysiloxane (d11) is a non-reactive liquid organopolysiloxane represented by the following formulas (3a) and/or (3b);

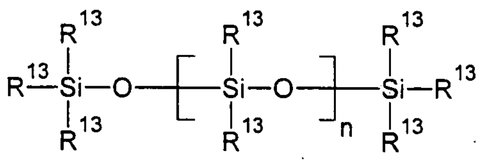

...... (3a)

(in the above general formula (3a), $R^{13}$s may be identical or different, and represent an alkyl group, aryl group, aralkyl group, or fluoroalkyl group, each having 1-10 carbon atoms, respectively, and n represents an integer of 0 to 500;)

$$R^{14}{}_xSi(R^{15}\text{-}Z)_yO_{(4-x-y)/2} \qquad (3b)$$

(in the above composition formula (3b), $R^{14}$ represents hydrogen atom, or an alkyl group, aryl group, or aralkyl group, each having $C_1$-$C_{10}$ carbon atoms, $R^{15}$ represents a $C_2$-$C_{10}$ divalent aliphatic hydrocarbon group which may be interrupted by ether group, ester group or -NH-, Z represents a monovalent polar group such as amino group, carboxyl group, epoxy group or a polyethylene glycol group or polypropylene glycol group of which terminal may be blocked with an alkyl group or acyl group having 1-6 carbon atoms, and x and y satisfy the relationships: $0.01 \le x < 3.99$, $0.02 \le y < 4$, and $0.02 \le x+y < 4$.)

**29.** The curable organopolysiloxane composition according to claim 25, wherein the liquid organopolysiloxane (d1) is a reactive liquid organopolysiloxane (d12).

**30.** The curable organopolysiloxane composition according to claim 29, wherein the reactive liquid organopolysiloxane (d12) is a silicone oil having at least one group represented by the following formula (3c);

$$\equiv SiR^4OSiRSiR^5{}_bY_{(3-b)} \qquad (3c)$$

(in the above formula (3c), $R^4$ represents an unsubstituted or substituted divalent hydrocarbon group or divalent hydrocarbon group which may contain ether linkage, $R^5$ represents an unsubstituted or substituted monovalent hydrocarbon group, Y represents a condensation reactive group and b represents 0, 1, or 2.)

**31.** The curable organopolysiloxane composition according to claim 29, wherein the condensation reactive group of the reactive liquid organopolysiloxane (d12) is at least one kind of condensation reactive group selected from the group consisting of hydroxyl group, oxime group, amino group, acetyloxy group and alkoxy group.

**32.** The curable organopolysiloxane composition according to any of claims 25 to 31, wherein the liquid organopolysiloxane (d1) is combined with the main agent component (A).

**33.** The curable organopolysiloxane composition according to any of claims 25 to 31, wherein the liquid organopolysiloxane (d1) is combined with the curing agent component (B).

**34.** The curable organopolysiloxane composition according to claim 32, wherein the added amount of liquid organopolysiloxane (d1) is 0.01-15 % by weight with respect to the total amount of organopolysiloxane (a1) and silica (a2).

**35.** The curable organopolysiloxane composition according to claim 32, wherein the added amount of liquid organopolysiloxane (d1) is 1-10 % by weight with respect to the total amount of organopolysiloxane (a1) and silica (a2).

**36.** The curable organopolysiloxane composition according to claim 33, wherein the added amount of liquid organopolysiloxane (d1) is 0.01-500 % by weight with respect to organosilane and/or a partial hydrolyzate thereof (b1).

**37.** The curable organopolysiloxane composition according to claim 33, wherein the added amount of liquid organopolysiloxane (d1) is 50-350 % by weight with respect to the organosilane and/or a partial hydrolyzate thereof (b1).

**38.** The curable organopolysiloxane composition according to any of claims 1 to 37, wherein a silane coupling agent is additionally combined with the main agent component (A) and/or the curing agent component (B).

**39.** The curable organopolysiloxane composition according to claim 38, wherein the added amount of silane coupling agent is 0.01-1 % by weight with respect to the total amount of organopolysiloxane (a1) and silica (a2).

**40.** The curable organopolysiloxane composition according to claim 38, wherein the added amount of silane coupling agent is 0.01-50 % by weight with' respect to organosilane and/or a partial hydrolyzate thereof (b1).

**41.** An antifouling paint composition containing the curable organopolysiloxane composition according to any of claims 1 to 40.

**42.** An antifouling coating film formed by curing the antifouling paint composition according to claim 41.

**43.** An antifouling composite coating film comprising

[I] an epoxy resin anticorrosive coating film formed from an anticorrosive paint composition containing an epoxy resin (e1) and an amine-based curing agent (e2) for epoxy resin, and
[II] the antifouling coating film according to claim 42 laminated directly on the surface of [I].

**44.** An antifouling composite coating film comprising

[I] an epoxy resin anticorrosive coating film formed from an anticorrosive paint composition containing an epoxy resin (e1), an amine-based curing agent (e2) for epoxy resin and a body pigment (e3), and
[II] the antifouling coating film according to claim 42 laminated directly on the surface of [I].

**45.** An antifouling composite coating film comprising

[I] an epoxy resin anticorrosive coating film formed from an anticorrosive paint composition containing an epoxy resin (e1), an amine-based curing agent (e2) for epoxy resin, a body pigment (e3), and an anti-sagging agent, and
[II] the antifouling coating film according to claim 42 laminated directly on the surface of [I].

**46.** The antifouling composite coating film according to any of claims 43 to 45, wherein the epoxy resin (e1) constituting the epoxy resin anticorrosive coating film [I] is a bisphenol type epoxy resin, and the amine-based curing agent (e2) for epoxy resin is a polyamideamine.

**47.** The antifouling composite coating film according to claim 44 or 45, wherein the body pigment (e3) constituting the epoxy resin anticorrosive coating film [I] is at least one kind of body pigment selected from the group consisting of talc, barium sulphate, mica, titanium dioxide, and carbon black.

**48.** The antifouling composite coating film according to claim 45, wherein the anti-sagging agent (e4) constituting the epoxy resin anticorrosive coating film [I] is a polyamide wax.

**49.** A base material coated with the antifouling coating film according to claim 42, or with the antifouling composite coating film according to any of claims 43 to 48.

**50.** An underwater structure coated with the antifouling coating film according to claim 42, or with the antifouling composite coating film according to any of claims 43 to 48.

**51.** A ship coated with the antifouling coating film according to claim 42, or with the antifouling composite coating film according to any of claims 43 to 48.

**52.** A method for making a base material antifouling by coating the surface of base material with the antifouling coating film according to claim 42, or with the antifouling composite coating film according to any of claims 43 to 48.

**INTERNATIONAL SEARCH REPORT**

International application No.
PCT/JP2007/051913

A. CLASSIFICATION OF SUBJECT MATTER
*C08L83/04*(2006.01)i, *B05D7/24*(2006.01)i, *B32B27/00*(2006.01)i, *B32B27/38*(2006.01)i, *C08K5/57*(2006.01)i, *C09D5/16*(2006.01)i, *C09D183/04*(2006.01)i

According to International Patent Classification (IPC) or to both national classification and IPC

B. FIELDS SEARCHED

Minimum documentation searched (classification system followed by classification symbols)
C08L83/00-83/16, C09D183/00-183/16, C09D5/16, B05D7/24, B32B27/00-B32B27/42

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
WPI/L, CASONLINE

C. DOCUMENTS CONSIDERED TO BE RELEVANT

| Category* | Citation of document, with indication, where appropriate, of the relevant passages | Relevant to claim No. |
|---|---|---|
| X | JP 2001-139816 A (Chugoku Marine Paints, Ltd., Shin-Etsu Chemical Co., Ltd.), 22 May, 2001 (22.05.01), Claims 1 to 20; Par. Nos. [0067], [0089] to [0090], [0109] & EP 1092758 A2 & US 6451437 B1 | 1-52 |
| X | JP 2001-181509 A (Chugoku Marine Paints, Ltd., Shin-Etsu Chemical Co., Ltd.), 03 July, 2001 (03.07.01), Claims 1 to 22; Par. Nos. [0073], [0095] to [0096], [0116] & EP 1092758 A2 & US 6451437 B1 | 1-52 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 April, 2007 (24.04.07) | 15 May, 2007 (15.05.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2007/051913

C (Continuation). DOCUMENTS CONSIDERED TO BE RELEVANT

| Category* | Citation of document, with indication, where appropriate, of the relevant passages | Relevant to claim No. |
|---|---|---|
| X | JP 2002-348536 A (Nippon Paint Co., Ltd.), 04 December, 2002 (04.12.02), Claim 3; Par. Nos. [0040], [0050], [0061] (Family: none) | 1-52 |
| A | JP 2004-210950 A (Nitto Kasei Co., Ltd.), 29 July, 2004 (29.07.04), Claims 1 to 5; Par. No. [0018] (Family: none) | 1-52 |
| A | JP 53-97045 A (Shin-Etsu Chemical Co., Ltd., The Lion Fat & Oil Co., Ltd.), 24 August, 1978 (24.08.78), Claims (Family: none) | 1-52 |
| A | JP 58-180554 A (Wacker Chemie GmbH.), 22 October, 1983 (22.10.83), Claims & EP 90409 A2 & US 4460761 A | 1-52 |
| A | JP 4-106156 A (Shin-Etsu Chemical Co., Ltd.), 08 April, 1992 (08.04.92), Claims 1 to 2 (Family: none) | 1-52 |
| P,X | JP 2007-16096 A (Chugoku Marine Paints, Ltd.), 25 January, 2007 (25.01.07), Claims 1 to 26 (Family: none) | 1-52 |
| P,X | WO 2006/109600 A1 (Chugoku Marine Paints, Ltd.), 19 October, 2006 (19.10.06), Claims 1 to 39 (Family: none) | 1-52 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002500239 A
- JP 5505845 A
- JP 5507955 A
- JP 7506599 A